# EUROPÄISCHE PATENTSCHRIFT

(11) **EP 3 721 097 B1**
(45) Veröffentlichungstag und Bekanntmachung des Hinweises auf die Patenterteilung: **08.10.2025**
(21) Anmeldenummer: 18825920.4
(22) Anmeldetag: 11.12.2018
(51) Int. Cl.: F16B 5/02, B60R 9/04, B60R 9/058

(54) **BEFESTIGUNGSANORDNUNG MIT WINKELAUSGLEICHSFUNKTION**
FASTENING ARRANGEMENT WITH ANGULAR COMPENSATION FUNCTION
ARRANGEMENT DE FIXATION AVEC FONCTION DE COMPENSATION ANGULAIRE

(30) Priorität: 21.12.2017 DE 102017130998
(43) Veröffentlichungstag der Anmeldung: 14.10.2020
(73) Patentinhaber: Böllhoff Verbindungstechnik GmbH, 33649 Bielefeld (DE)
(72) Erfinder: FIGGE, Hans-Ulrich, 33758 Schloß Holte - Stukenbrock (DE); KÖNIG, Michael, 33729 Bielefeld (DE); HEINRICHS, Heinrich, 32602 Vlotho (DE); WELZEL, Gerald, 33607 Bielefeld (DE)
(74) Vertreter: HWP Intellectual Property
(86) Internationale Anmeldenummer: PCT/EP2018/084416
(87) Internationale Veröffentlichungsnummer: WO 2019/121180

(56) Entgegenhaltungen:
- EP-A1- 3 199 405
- EP-A2- 2 003 346
- DE-A1- 102007 037 242
- DE-A1- 102012 221 228

## Beschreibung

### 1. Gebiet der Erfindung

Die vorliegende Erfindung betrifft eine Befestigungsanordnung zum Befestigen eines ersten Bauteils an einem zweiten Bauteil mit selbsttätigem Ausgleich von Toleranzen im Abstand zwischen dem ersten und dem zweiten Bauteil. Ebenso betrifft die vorliegende Erfindung ein erstes Bauteil in Kombination mit einer Befestigungsanordnung sowie ein erstes und ein zweites Bauteil, die über eine Befestigungsanordnung mittels einer Befestigungsschraube aneinander befestigt sind, ein Herstellungsverfahren einer Befestigungsanordnung sowie ein Montageverfahren einer Befestigungsanordnung.

### 2. Hintergrund der Erfindung

Befestigungsanordnungen sind in großer Vielfalt bekannt. Befestigungsanordnungen mit Toleranzausgleichsfunktion bestehen üblicherweise aus einem Basiselement, einer Verstellbuchse oder Verstelleinheit mit einem sogenannten Mitschleppabschnitt oder Mitschlepper, der mit einer Befestigungsschraube eine Reibschlussverbindung eingehen kann. Das Basiselement wird mit darin eingeschraubter Verstelleinheit in einer Öffnung in einem ersten Bauteil befestigt, wobei die Verstelleinheit einem zweiten Bauteil zugewandt ist. Nun wird eine Befestigungsschraube durch die Öffnungen im zweiten Bauteil eingesetzt und kommt in Kontakt mit dem Mitschlepper. Beim Drehen der Befestigungsschraube wird daher die Verstellbuchse mitgedreht, bis sie sich an das zweite Bauteil anlegt, worauf dann beim Weiterdrehen der Befestigungsschraube und entsprechender Erhöhung des Drehmoments die Reibschlussverbindung überwunden wird, sodass dann die beiden Bauteile durch die Befestigungsschraube über die Verstellbuchse miteinander verspannt werden können.

In bestimmten Ausgestaltungen weisen solche Befestigungsanordnungen zusätzlich eine Winkelausgleichsfunktion auf. Als Element für die Realisierung einer solchen Winkelausgleichsfunktion wird üblicherweise eine Kugelscheibe oder Ähnliches an dem Ende der Verstelleinheit vorgesehen, das mit dem zweiten Bauteil in Kontakt kommt. Mittels der Kugelscheibe findet daher ein Anpassen an die Anlagefläche des zweiten Bauteils statt. Eine Längsachse der Befestigungsanordnung verläuft jedoch weiterhin senkrecht zu der Ebene, in der die Öffnung des ersten Bauteils liegt. Somit muss die Kugelscheibe auch die Kraft aufnehmen, die für eine Befestigung der Bauteile aneinander erforderlich ist, und dementsprechend gestaltet sowie dimensioniert sein. Beispiele für derartige Befestigungsanordnungen mit Toleranzausgleichs- und Winkelausgleichsfunktion sind beispielsweise beschrieben in DE 10 2011 054 861 A1, DE 10 2012 009 173 A1, DE 20 2011 105 943 U1, DE 10 2008 026 414 A1 DE 20 2011 103 827 U1 und DE 20 2011 100 696 U1.

Ein Dachträgersystem für ein Kraftfahrzeug ist weiterhin in EP 3 199 405 A1 beschrieben. Das System umfasst einen Dachträger, der zum Zusammenbau in Längsrichtung des Fahrzeugs konfiguriert ist, sowie mindestens eine vordere Befestigungsvorrichtung, die eine erste in dem Dachträger verankerte Mutter umfasst. Weiterhin ist mindestens eine hintere Befestigungsvorrichtung mit einer zweiten Mutter vorgesehen, die in dem Dachträger verankert ist. Die hintere Befestigungsvorrichtung umfasst eine Abstandsvorrichtung, die die zweite Mutter zur Unterstützung aufnehmen kann, wobei die Höhe der Abstandsvorrichtung einstellbar ist. Die erste Mutter hat eine zylindrische Zone, die einen Abstandshalter mit vordefinierter Höhe bildet.

Die Aufgabe der vorliegenden Erfindung ist daher, eine im Hinblick auf die Winkelausgleichsfunktion im Vergleich zum Stand der Technik optimierte Befestigungsanordnung mit Toleranzausgleichsfunktion bereitzustellen.

### 3. Zusammenfassung der Erfindung

Die obige Aufgabe wird gelöst durch eine Befestigungsanordnung zum Befestigen eines ersten Bauteils an einem zweiten Bauteil mit selbsttätigem Ausgleich von Toleranzen im Abstand zwischen dem ersten und dem zweiten Bauteil gemäß dem unabhängigen Patentanspruch 1, ein erstes Bauteil in Kombination mit einer Befestigungsanordnung gemäß dem abhängigen Patentanspruch 10, ein erstes und ein zweites Bauteil, die über die Befestigungsanordnung mittels einer Befestigungsschraube aneinander befestigt sind, gemäß dem abhängigen Patentanspruch 11, ein Herstellungsverfahren einer Befestigungsanordnung gemäß dem unabhängigen Patentanspruch 13 sowie ein Montageverfahren einer Befestigungsanordnung gemäß dem unabhängigen Patentanspruch 18. Vorteilhafte Ausführungsformen und Weiterentwicklungen ergeben sich aus der nachfolgenden Beschreibung, den Zeichnungen sowie den anhängigen Patentansprüchen.

Eine erfindungsgemäße Befestigungsanordnung zum Befestigen eines ersten Bauteils an einem zweiten Bauteil mit selbsttätigem Ausgleich von Toleranzen im Abstand zwischen dem ersten Bauteil und dem zweiten Bauteil, weist die folgenden Merkmale auf: ein Basiselement mit einem ersten und einem zweiten axialen Ende sowie einer Haltestruktur an einer radial äußeren Seite zum Halten des Basiselements in einer Öffnung des ersten Bauteils, und eine in das Basiselement einschraubbare Verstelleinheit mit einer darin eingesetzten Mitschleppereinheit, während eine Befestigungsschraube mit der Verstelleinheit über die Mitschleppereinheit durch eine lösbare Mitschleppverbindung verbindbar ist, so dass bei einem Drehen der Befestigungsschraube die Verstelleinheit mitdrehbar und in Anlage mit dem zweiten Bauteil bewegbar ist, wobei die Haltestruktur des Basiselements ein Haltesegment aufweist, das bezogen auf eine Ebene senkrecht zur Längsachse des Basiselements in einem Winkel ungleich 0° angeordnet ist oder um eine Achse der Ebene schwenkbar ist, so dass mittels des Haltesegments ein Winkel zwischen dem ersten und dem zweiten Bauteil derart ausgleichbar ist, dass bei Anlage der Verstelleinheit am zweiten Bauteil eine Längsachse der Befestigungsanordnung senkrecht zu einer Ebene des zweiten Bauteils verläuft.

Nachfolgend wird die erfindungsgemäße Befestigungsanordnung anhand ihrer Verwendung illustriert, bei der drei Bauteile miteinander verbunden werden sollen. Bei dem ersten Bauteil handelt es sich beispielsweise um eine Dachhaut, bei dem zweiten Bauteil um eine Karosseriestruktur und beim dritten Bauteil um eine Dachreling. Das erste Bauteil, d.h. die Dachhaut, ist zwischen dem zweiten und dem dritten Bauteil angeordnet, wobei eine Befestigung des dritten Bauteils an dem zweiten Bauteil möglichst ohne Krafteinwirkung auf das erste Bauteil erfolgen soll. Bezogen auf die beispielhafte Dachhaut als erstes Bauteil handelt es sich bei dem ersten Bauteil somit um ein Bauteil aus einem insbesondere im Vergleich zum zweiten Bauteil dünnwandiges Bauteil.

Zunächst wird die erfindungsgemäße Befestigungsanordnung in eine Öffnung des ersten Bauteils eingesetzt, so dass die Befestigungsanordnung in der Öffnung verlässlich angeordnet und gehalten wird. Eine solche Anordnung erfolgt über die Haltestruktur an der Außenseite des Basiselements. Die Haltestruktur hat dabei die Funktion, das Basiselement, und somit die Befestigungsanordnung, am ersten Bauteil so anzuordnen, dass bei einer späteren Verwendung keine oder nur geringe Kräfte auf das erste Bauteil wirken, um dieses nicht zu verformen. Um ein Mitdrehen des Basiselements während der Montage der Befestigungsanordnung zu verhindern, weist das Basiselement eine äußere Form auf, die eine verdrehsichere Anordnung in der Öffnung des ersten Bauteils gestattet. Weiterhin ist es bevorzugt, dass die Haltestruktur ein Verschieben in der Öffnung des ersten Bauteils gestattet, so dass Toleranzen ausgleichbar sind. Die spezifische Gestaltung der Haltestruktur sowie des Basiselements insgesamt wird später detailliert im Rahmen der bevorzugten Ausführungsformen diskutiert. Grundsätzlich ist als Haltestruktur jede Struktur bevorzugt, mit der ein Einclipsen, also eine formschlüssige Befestigung, insbesondere mittels einer Rastverbindung, in der Öffnung des ersten Bauteils realisierbar ist. Das Einsetzen in das erste Bauteil erfolgt vorzugsweise von der Seite des ersten Bauteils, die später dem dritten Bauteil zugewandt ist.

Beabstandet vom ersten Bauteil wird das zweite Bauteil angeordnet, wobei eine Öffnung im zweiten Bauteil vorzugsweise mit der Öffnung des ersten Bauteils ausgerichtet ist. Das zweite axiale Ende des Basiselements ist dabei dem zweiten Bauteil zugewandt. Eine Befestigungsschraube wird zur Befestigung des zweiten Bauteils durch die Öffnung im zweiten Bauteil geführt und gelangt zunächst reibschlüssig in Eingriff mit der Mitschleppereinheit der Verstelleinheit. Die Befestigungsschraube bildet mit der Mitschleppereinheit somit eine lösbare Mitschleppverbindung, um beim Drehen der Befestigungsschraube die Verstelleinheit mitzudrehen und dadurch die Verstelleinheit zwecks Toleranzausgleich in Anlage mit dem zweiten Bauteil zu bewegen.

In einer bevorzugten Ausführungsform weisen daher das Basiselement ein erstes Innengewinde und die Verstelleinheit ein erstes Außengewinde auf, wobei das erste Außengewinde der Verstelleinheit mit dem ersten Innengewinde des Basiselements eine erste Gewindepaarung einer ersten Gangrichtung bildet und die Verstelleinheit ist vom zweiten axialen Ende des Basiselements her in das Basiselement einschraubbar, und die Befestigungsschraube weist ein zweites Außengewinde einer zweiten Gangrichtung auf, die der ersten Gangrichtung entgegengesetzt ist, und ist durch eine Öffnung des Basiselements und der Verstelleinheit einsetzbar, so dass die Verstelleinheit durch Drehen der Befestigungsschraube in die zweite Gangrichtung in Anlage mit dem zweiten Bauteil bewegbar ist. Beispielhaft handelt es sich bei der ersten Gangrichtung um ein Linksgewinde und bei der zweiten Gangrichtung um ein Rechtsgewinde.

In Abhängigkeit von der Art des vorhandenen Haltesegments ist zwischen zwei alternativen Ausgestaltungen der Haltestruktur zu unterscheiden, wenn das erste und das zweite Bauteil nicht parallel zueinander angeordnet sind. Generell stellt das Haltesegment in jeder Ausgestaltung eine Anlagefläche bereit, mit der es in Anlage mit dem ersten Bauteil kommt, vorzugsweise auf einer dem zweiten Bauteil zugewandten Seite des ersten Bauteils.

In der ersten Alternative ist das Haltesegment in einem Winkel ungleich 0° bezogen auf eine Ebene senkrecht zur Längsachse des Basiselements angeordnet. Der Winkel ist dabei auf den Winkel angepasst, der zwischen dem ersten und dem zweiten Bauteil im Bereich der sich gegenüberliegenden Öffnungen vorliegt. Nach dem Einsetzen der Befestigungsanordnung in das erste Bauteil ist daher die Längsachse der Befestigungsanordnung bereits senkrecht oder nahezu senkrecht zu der Ebene, in der das zweite Bauteil liegt. Dies bedeutet, dass zwischen der Ebene, in der die Öffnung im ersten Bauteil liegt, und der Längsachse des Basiselements bzw. der Befestigungsanordnung ein Winkel ungleich 90° vorliegt. Aufgrund der bereits senkrecht zur Ebene des zweiten Bauteils ausgerichteten Anordnung der Befestigungsanordnung kann die Befestigungsschraube besonders einfach in die Befestigungsanordnung eingeführt und in einer Befestigungsmutter im oder am dritten Bauteil befestigt werden.

In einem Winkel bezogen auf die Ebene senkrecht zur Längsachse des Basiselements angeordnet heißt im Rahmen dieser Beschreibung, dass das Haltesegment, insbesondere die Anlagefläche des Haltesegments, nicht in der entsprechenden Ebene angeordnet ist, sondern mit dieser einen Winkel einschließt.

In der zweiten Alternative ist das Haltesegment um eine Achse der Ebene schwenkbar. Nach dem Einsetzen der Befestigungsanordnung in die Öffnung im ersten Bauteil ist die Längsachse der Befestigungsanordnung daher senkrecht zu der Eben ausgerichtet, in der die Öffnung des ersten Bauteils liegt. Wird nun die Befestigungsschraube durch die Öffnung im zweiten Bauteil geführt, gelangt sie mit der Mitschleppereinheit in Eingriff, bildet mit der Mitschleppereinheit eine lösbare Mitschleppverbindung und bewegt beim Drehen die Verstelleinheit mit, bis die Verstelleinheit in Anlage mit dem zweiten Bauteil kommt. Aufgrund der benachbart zum ersten Bauteil vorhandenen Winkelausgleichsfunktion kommt die Verstelleinheit flächig in Anlage mit dem zweiten Bauteil, so dass eine Längsachse des Basiselements und der Befestigungsanordnung senkrecht zur Ebene der Öffnung des zweiten Bauteils ausgerichtet wird. Dementsprechend liegt erneut zwischen der Ebene, in der die Öffnung im ersten Bauteil liegt, und der Längsachse des

Basiselements bzw. der Befestigungsanordnung ein Winkel ungleich 90° vor. Im Unterschied zur ersten Alternative findet somit ein Winkelausgleich erst statt während die Verstelleinheit in Anlage mit dem zweiten Bauteil kommt. Bei Weiterdrehen der Befestigungsschraube durchdringt diese die Befestigungsanordnung und gelangt mit der Befestigungsmutter in Eingriff.

In beiden Ausgestaltungen des Haltesegments erfolgt der Winkelausgleich somit nicht an der Verstelleinheit, sondern am Basiselement. Auf diese Weise ist die Befestigungsanordnung mit ihrer Längsachse senkrecht zu der Ebene ausgerichtet, in der die Öffnung des zweiten Bauteils angeordnet ist. Mittels der erfindungsgemäßen Befestigungsanordnung ist somit eine Verbindung zwischen drei Bauteilen, beispielsweise Dachhaut, Karosseriestruktur und Dachreling, herstellbar. Das dritte Bauteil ist dabei am zweiten Bauteil befestigt und das dazwischen liegende erste Bauteil muss keine Kraft aufnehmen. Trotz nicht parallel verlaufendem erstem und zweitem Bauteil, also Dachhaut und Karosseriestruktur, ist die Befestigungsanordnung mit ihrer Längsachse senkrecht zur Ebene der Karosseriestruktur ausgerichtet, so dass das Einschrauben der Befestigungsschraube in die Befestigungsmutter erleichtert ist, da die Längsachse der Befestigungsmutter ebenfalls senkrecht zur Ebene verläuft, in der das zweite Bauteil angeordnet ist.

Ein Vorteil der erfindungsgemäßen Befestigungsanordnung ist daher, dass ein Winkel zwischen dem ersten und dem zweiten Bauteil derart ausgleichbar ist, dass bei Anlage der Verstelleinheit am zweiten Bauteil eine Längsachse der Befestigungsanordnung senkrecht zu einer Ebene des zweiten Bauteils verläuft. Dies vereinfacht die Befestigung der Befestigungsschraube in der Befestigungsmutter. Darüber hinaus wird auf diese Weise einerseits eine einfache Handhabbarkeit der Befestigungsanordnung realisiert und andererseits ist das Haltesegment zum Winkelausgleich nicht an der Befestigung beteiligt, so dass insbesondere auch keine Kraft vom dritten oder zweiten Bauteil über das Haltesegment auf das erste Bauteil ausgeübt wird. Zudem ist es vorteilhaft, dass das erste axiale Ende des Basiselements eine definierte Lage bezogen auf das erste Bauteil aufweist. Weiterhin ist so ein Abstand zwischen dem ersten Bauteil und dem dritten Bauteil, das die Befestigungsmutter aufweist und auf der dem zweiten Bauteil abgewandten Seite des ersten Bauteils angeordnet ist, gezielt einstellbar.

In einer vorteilhaften Ausführungsform umfasst die Haltestruktur des Basiselements zwei Anlagearme benachbart zum ersten axialen Ende, so dass die Anlagearme mit einer ersten Seite des ersten Bauteils benachbart der Öffnung des ersten Bauteils in Anlage bringbar sind. Vorzugsweise sind die Anlagearme einander gegenüberliegend angeordnet. Aufgrund des Vorstehens der Anlagearme in radialer Richtung nach außen vom Basiselement verläuft eine Längsachse der Anlagearme senkrecht zur Längsachse des Basiselements. Die Anlagearme stellen beim Einsetzen des Basiselements oder der Befestigungsanordnung in die Öffnung des ersten Bauteils daher eine Beschränkung in axialer Richtung bereit. Vorzugsweise erfolgt das Einsetzen der Befestigungsanordnung so, dass die Befestigungsanordnung von der Seite des ersten Bauteils in die Öffnung eingesetzt wird, die abgewandt vom zweiten Bauteil ist bzw. der dem dritten Bauteil zugewandten Seite des ersten Bauteils. Bezogen auf die spätere Verwendung ist somit der Bereich der Befestigungsanordnung von den Anlagearmen in Richtung des zweiten axialen Endes des Basiselements im Zwischenraum zwischen dem ersten und dem zweiten Bauteil angeordnet. Lediglich der Bereich der Befestigungsanordnung von den Anlagearmen in Richtung des ersten axialen Endes des Basiselements steht von der dem dritten Bauteil zugewandten Seite des ersten Bauteils hervor.

Alternativ oder zusätzlich ist es bevorzugt, dass die Befestigungsanordnung zwei Haltesegmente aufweist, die insbesondere W-förmig sind und die eine Anlagefläche axial beabstandet vom ersten axialen Ende des Basiselements bereitstellen, so dass die Anlagefläche mit einer zweiten Seite des ersten Bauteils benachbart der Öffnung des ersten Bauteils in Anlage bringbar sind. Vorzugsweise sind die Haltesegmente ebenfalls einander gegenüberliegend angeordnet. Insbesondere bei einer Ausführungsform mit Anlagearmen sind die Anlagearme und die Haltesegmente so angeordnet, dass die mit dem ersten Bauteil in Kontakt kommenden Flächen der Anlagearme und die mit dem ersten Bauteil in Kontakt kommenden Anlageflächen der Haltesegmente einen Winkel von ungefähr 90° einschließen, wenn die Befestigungsanordnung vom ersten oder zweiten axialen Ende des Basiselements betrachtet wird. Anders ausgedrückt sind die Anlagearme und die Anlageflächen eines jeweiligen Haltesegments so angeordnet, dass die Längsachse der Anlagearme projiziert in die Ebene der Anlageflächen des Haltesegments mit einer Achse, die zwei Anlageflächen desselben Haltesegments auf dem kürzesten Weg verbindet, einen Winkel von 90° bildet. Dementsprechend verläuft eine Achse, die zwei Anlageflächen von benachbarten Haltesegmenten auf dem kürzesten Weg verbindet, parallel zur Längsachse der Anlagearme. Ein Abstand zwischen den Anlageflächen der Haltesegmente und der dem zweiten axialen Ende des Basiselements zugewandten Seite der Anlagearmen ist vorzugsweise größer als die Materialstärke des ersten Bauteils, sodass ein Spiel entlang der Längsachse der Befestigungsanordnung vorhanden ist.

Die Haltesegmente stellen sicher, dass das Basiselement verlässlich im ersten Bauteil befestigbar ist und nicht entgegen einer Einsetzrichtung aus dem ersten Bauteil herausfallen kann. Eine Befestigungsfunktion bei der späteren Verwendung, also insbesondere ein Ableiten von Kraft, wird von den Haltesegmenten nicht realisiert, wie eingangs erläutert. Die Haltesegmente stellen insbesondere eine elastische oder federnde Raststruktur bereit, die eine formschlüssige Verbindung mit dem ersten Bauteil realisiert.

Die Funktionsweise der Anlagearme sowie der Haltesegmente wird beispielhaft an einem W-förmigen Haltesegment und dem Einsetzen in eine rechteckige Öffnung im ersten Bauteil beschrieben. In diesem Fall gestatten die Haltesegmente eine verdrehsichere Anordnung im ersten Bauteil. Die W-förmigen Haltesegment sind axial beabstandet von den Anlagearmen an der Außenseite des Basiselements angeordnet. Insbesondere ein Mittelsteg der W-förmigen Struktur ist unterhalb der Anlagearme angeordnet, sodass ein rechter und ein linker Schenkel der W-förmigen Struktur seitlich vom jeweiligen Anlagearm angeordnet ist. Da die Längsachse der Anlagearme vorzugsweise senkrecht zur Längsachse des Basiselements verläuft, verläuft die Längsachse des Mittelstegs der W-förmigen Haltesegmente parallel zur Längsachse des Basiselements.

Während des Einsetzens der Befestigungsanordnung mit vorauseilender Verstelleinheit in die Öffnung im ersten Bauteil federn die Schenkel der W-förmigen Struktur zunächst nach innen. Nachdem die W-förmige Struktur durch die Öffnung hindurch bewegt wurde, federn die Schenkel der W-förmigen Struktur zurück nach außen. Die Anlagearme stellen hierbei eine Begrenzung in Einsetzrichtung bereit, während die W-förmige Struktur nach dem Zurückfedern eine Begrenzung entgegen der Einsetzrichtung bereitstellt. Mittels dieser Ausgestaltung ist ein Verschieben der Befestigungsanordnung innerhalb der Öffnung begrenzt realisierbar, so dass Toleranzen in dieser Ebene ausgleichbar sind. Zudem kann mittels der zwei W-förmigen Haltesegmente eine verdrehsichere Anordnung im ersten Bauteil erzielt werden.

Im Ausgangszustand der Befestigungsanordnung sind im Hinblick auf die Anlageflächen der Haltesegmente die anfänglich diskutierten unterschiedliche Ausgestaltung der Haltesegmente zu berücksichtigen. In der ersten Ausgestaltung, in der das Haltesegment in einem Winkel ungleich 0 ° angeordnet ist, liegen die Anlageflächen der Haltesegmente in einer Ebene, die in einer Richtung durch eine zur Längsachse der Anlagearme parallele Achse definiert wird und die mit der Längsachse des Basiselements einen Winkel ungleich 90° einschließt.

In der zweiten Ausgestaltung, in der das Haltesegment um eine Achse der Ebene schwenkbar ist, sind die Anlageflächen im Ausgangszustand in einer Ebene senkrecht zur Längsachse des Basiselements angeordnet. Somit wird diese Ebene in einer Richtung auch durch eine zur Längsachse der Anlagearme parallele Achse definiert, schließt aber mit der Längsachse des Basiselements im Ausgangszustand einen Winkel von 90° ein.

Im Hinblick auf eine Anordnung der schwenkbaren Haltesegmente am Basiselement sind verschiedene Ausgestaltungen bevorzugt. In einer ersten Alternative, und wenn das Basiselement ebenfalls Anlagearme aufweist, ist es bevorzugt, dass jedes der Haltesegmente über einen elastischen Teilbereich, insbesondere eine Biegefeder, an einem der Anlagearme angeordnet ist. In einer zweiten Alternative ist es bevorzugt, dass das Basiselement axial beabstandet vom ersten axialen Ende des Basiselements jeweils einen vom Basiselement radial nach außen vorstehenden Stift aufweist. Im Rahmen dieser zweiten Alternative ist es zusätzlich bevorzugt, dass die Haltesegmente jeweils eine Öffnung aufweisen, so dass die Haltesegmente auf den Stift clipsbar und dort frei schwenkbar anordenbar sind. Clipsbar bedeutet, dass der Stift mit der Öffnung im Mittelsteg des Haltesegments eine formschlüssige Rastverbindung eingehen kann, wobei der Stift einen kegelstumpfförmigen Kopf aufweist, so dass ein Draufschieben des Haltesegments auf den Stift erleichtert und ein Herunternehmen erschwert ist. Beide Alternativen haben gemeinsam, dass die Haltesegmente genau um eine Achse schwenkbar sind und auch nur dort einen Winkel ausgleichen können.

In einer weiteren bevorzugten Ausführungsform weist das Basiselement ein Gehäuse, insbesondere aus Kunststoff, sowie eine darin angeordnete, insbesondere eingebettete, Mutter auf, die das erste Innengewinde bereitstellt. Die Mutter kann aus Kunststoff oder Metall bestehen. In einer ebenso bevorzugten Ausführungsform umfasst die Mitschleppereinheit einen Mitschlepper, vorzugsweise aus Kunststoff, sowie eine Anlagescheibe, vorzugsweise aus Metall, wobei der Mitschlepper mittels Presssitz in der Verstelleinheit gehalten ist. In diesem Zusammenhang ist es ebenfalls bevorzugt, wenn die Verstelleinheit eine Gewindehülse aus Kunststoff aufweist, wobei der Mitschlepper mittels Presssitz in der Gewindehülse gehalten ist. Vorzugsweise weist der Mitschlepper ein erstes und ein zweites axiales Ende auf, wobei das erste axiale Ende bündig mit einer ersten Seite der Anlagescheibe angeordnet ist und eine zweite der ersten Seite gegenüberliegende Seite der Anlagescheibe liegt an der Verstelleinheit an. Mittels dieser Ausgestaltungen kann insbesondere die erste Gewindepaarung aus Kunststoff bereitgestellt werden, sodass es sich bei dem ersten Innengewinde sowie dem ersten Außengewinde um definierte Gewinde handelt. Bei der ersten Gewindepaarung aus Außengewinde der Verstelleinheit und Innengewinde des Basiselements handelt es sich alternativ bevorzugt um eine Metall-Metall-Gewindepaarung, wodurch im Vergleich zum Kunststoff höhere Kräfte ableitbar sind. Auch Kombinationen hiervon sind realisierbar. Zudem kann aufgrund der Anlagescheibe aus Metall eine gute Kraftübertragung auf das zweite Bauteil erzielt werden.

In einer besonders vorteilhaften Ausführungsform weisen das Basiselement und die Verstelleinheit zusammenwirkende Strukturen auf, die im eingeschraubten Zustand der Verstelleinheit eine Konter- und/oder Transportsicherung bilden. Derartige Konter-und/oder Transportsicherung sind im Rahmen solcher Befestigungsanordnung bekannt. Beispielsweise weist das Basiselement am zweiten axialen Ende einen Vorsprung in axialer Richtung auf, der im eingeschraubten Zustand der Verstelleinheit mit einem radialen Vorsprung an einem aus dem Basiselement vorstehenden Ende der Verstelleinheit, insbesondere gebildet durch einer radialen Aussparung an der Anlagescheibe, zusammenwirkt. Dies wird später unter Bezugnahme auf die bevorzugten Ausführungsformen detailliert diskutiert.

Ein erfindungsgemäßes erstes Bauteil weist eine erfindungsgemäße Befestigungsanordnung auf, wobei die Befestigungsanordnung insbesondere in eine Öffnung des ersten Bauteils eingeclipst ist. Mit dem Einclipsen wird eine formschlüssige Verbindung zwischen Befestigungsanordnung, insbesondere dem Haltesegment, und dem ersten Bauteil hergestellt, beispielsweise über federnde Rastarme, wie dies oben im Zusammenhang mit der erfindungsgemäße Befestigungsanordnung erläutert wurde. Im Hinblick auf die sich ergebenden Vorteile wird auf die Ausführungen zur erfindungsgemäßen Befestigungsanordnung verwiesen, um unnötige Wiederholungen zu vermeiden.

Ein erfindungsgemäßes erstes und ein zweites Bauteil sind über die erfindungsgemäße Befestigungsanordnung sowie mittels einer Befestigungsschraube aneinander befestigt. Im Hinblick auf die sich ergebenden Vorteile wird auch hier auf die Ausführungen zur erfindungsgemäßen Befestigungsanordnung verwiesen.

In einer bevorzugten Ausführungsform ist die Befestigungsschraube in eine Befestigungsmutter eingeschraubt, die an einem dritten Bauteil angeordnet ist, während das erste Bauteil eine Dachhaut, das zweite Bauteil eine Karosseriestruktur und das dritte Bauteil eine Dachreling ist. Auf diese Weise ist mit der erfindungsgemäßen Befestigungsanordnung eine Befestigung der Dachreling an der Karosseriestruktur bei einer dazwischenliegenden und nicht parallel zur Karosseriestruktur verlaufenden Dachhaut realisierbar.

Ein erfindungsgemäßes Herstellungsverfahren einer erfindungsgemäßen Befestigungsanordnung umfasst die folgenden Schritte: Bereitstellen eines Basiselements mit einem ersten und einem zweiten axialen Ende, das an einer radial äußeren Seite eine Haltestruktur zum Halten des Basiselements in einer Öffnung des ersten Bauteils aufweist, Bereitstellen einer Verstelleinheit mit einer Mitschleppereinheit, Einschrauben der Verstelleinheit vom zweiten axialen Ende des Basiselements her in das Basiselement. In einer bevorzugten Ausführungsform weisen das Basiselement ein erstes Innengewinde und die Verstelleinheit ein erstes Außengewinde auf, wobei das erste Außengewinde der Verstelleinheit mit dem ersten Innengewinde des Basiselements eine erste Gewindepaarung einer ersten Gangrichtung bildet. Das Einschrauben der Verstelleinheit in das Basiselement erfolgte somit über die erste Gewindepaarung der ersten Gangrichtung. Bei dieser ersten Gangrichtung handelt es sich beispielsweise um ein Linksgewinde, während die zweite Gangrichtung durch ein Rechtsgewinde definiert ist. Mit dem erfindungsgemäßen Herstellungsverfahren ist die erfindungsgemäße Befestigungsanordnung herstellbar, so dass im Hinblick auf die sich ergebenden Vorteile erneut auf die obigen Ausführungen verwiesen wird.

Es ist ebenso bevorzugt, dass der Schritt des Bereitstellens des Basiselements aufweist: Bereitstellen der Haltestruktur des Basiselements mit zwei Anlagearmen benachbart zum ersten axialen Ende des Basiselements, so dass die Anlagearme mit einer ersten Seite des ersten Bauteils benachbart der Öffnung des ersten Bauteils in Anlage bringbar sind, wobei die Anlagearme vorzugsweise einander gegenüberliegend angeordnet sind. Alternativ oder zusätzlich ist es bevorzugt, dass der Schritt des Bereitstellens des Basiselements aufweist: Bereitstellen von zwei Haltesegmenten, die insbesondere W-förmig sind und die eine Anlagefläche axial beabstandet vom ersten axialen Ende des Basiselements bereitstellen, so dass die Anlagefläche mit einer zweiten Seite des ersten Bauteils benachbart der Öffnung des ersten Bauteils in Anlage bringbar ist. Die Anlagearmen stellen eine Begrenzung in Einsetzrichtung des Basiselements bereit, während die Haltesegmente sicherstellen, dass das Basiselement verlässlich im ersten Bauteil befestigbar ist und nicht entgegen der Einsetzrichtung aus dem ersten Bauteil herausfallen kann.

Im Hinblick auf die Anordnung der schwenkbaren Haltesegmente am Basiselement sind zwei alternative Befestigungsmöglichkeiten zu unterscheiden. In einer ersten Alternative, und sofern die Anlagearmen vorhanden sind, ist es bevorzugt, dass jedes der Haltesegmente über einen elastischen Teilbereich, insbesondere eine Biegefeder, an einem der Anlagearme angeordnet ist. In einer zweiten Alternative weist das Basiselement axial beabstandet vom ersten axialen Ende jeweils einen radial nach außen vorstehenden Stift auf und die Haltesegmente weisen jeweils eine Öffnung auf, so dass das Verfahren den weiteren Schritt des Anordnens der Haltesegmente auf dem Stift umfasst. Mit beiden Alternativen ist ein Verschwenken der Haltesegmente um nur eine Achse realisierbar, so dass bei nicht parallel angeordnetem erstem und zweitem Bauteil ein Winkel zwischen erstem und zweitem Bauteil ausgleichbar ist.

Vorteilhafterweise umfasst der Schritt des Bereitstellens des Basiselements: Bereitstellen einer Mutter und Anordnen der Mutter in einem Gehäusematerial des Basiselements, insbesondere mittels Einbetten in einen Kunststoff. Die Mutter kann aus Metall oder Kunststoff bestehen. Es ist ebenso bevorzugt, das der Schritt des Bereitstellens der Verstelleinheit umfasst: Bereitstellen einer Gewindehülse und einer Mitschleppereinheit umfassend eine Anlagescheibe, vorzugsweise aus Metall, und eines Mitschleppers, vorzugsweise aus Kunststoff. Vorzugsweise umfasst das Herstellungsverfahren den weiteren Schritt: Einpressen des Mitschleppers in die in das Basiselement eingeschraubte Gewindehülse, so dass eine Anlagescheibe mit einer ersten Seite bündig mit einem ersten Ende des Mitschleppers abschließt und mit einer der ersten Seite entgegengesetzten zweiten Seite an der Gewindehülse anliegt. Auf diese Weise kann die Mitschleppereinheit bzw. der Mitschlepper aus Kunststoff bereitgestellt werden, wobei vorzugsweise die Gewindehülse ebenfalls aus Kunststoff besteht. Bei der ersten Gewindepaarung aus Außengewinde der Verstelleinheit und Innengewinde des Basiselements handelt es sich vorzugsweise um eine Kunststoff-Kunststoff-Gewindepaarung handeln, sodass die Gewinde genau definiert sind, oder um eine Metall-Metall-Gewindepaarung, wodurch im Vergleich zum Kunststoff höhere Kräfte ableitbar sind. Auch Kombinationen hiervon sind realisierbar. Insbesondere bei einer Metall-Metall-Gewindepaarung ist es bevorzugt, dass die Gewindehülse der Verstelleinheit zunächst in das Basiselement eingeschraubt wird. Die Einschraubtiefe wird hierbei beispielsweise so gewählt, dass nach dem Verbinden der Anlagescheibe mit der Gewindehülse die Elemente der Transportsicherung miteinander in Eingriff stehen oder benachbart zueinander angeordnet sind. Erst nach dem Einschrauben der Gewindehülse in das Basiselement wird dann die Anlagescheibe mittels Einpressen des Mitschleppers in die Gewindehülse mit der Gewindehülse fest verbunden.

In einer weiteren vorteilhaften Ausführungsform weisen das Basiselement und die Verstelleinheit zusammenwirkende Strukturen auf, die eine Konter- und/oder Transportsicherung im eingeschraubten Zustand der Verstelleinheit bilden. Wie bereits oben dargelegt sind derartige Konter- und/oder Transportsicherung bei Befestigungsanordnungen mit Toleranzausgleichsfunktion bekannt, so dass eine solche Konter- und/oder Transportsicherung nur im Rahmen der detaillierten Ausführungsform diskutiert wird.

Ein erfindungsgemäßes Montageverfahren einer Befestigungsanordnung, insbesondere einer erfindungsgemäßen Befestigungsanordnung, umfasst die Schritte: Einsetzen der Befestigungsanordnung in eine erste Öffnung eines ersten Bauteils, wobei die Befestigungsanordnung aufweist ein Basiselement mit einem ersten und einem zweiten axialen Ende, das an einer radial äußeren Seite eine Haltestruktur zum Halten des Basiselements in der ersten Öffnung des ersten Bauteils aufweist, und eine in das Basiselement einschraubbare Verstelleinheit mit einer darin eingesetzten Mitschleppereinheit, wobei die Haltestruktur des Basiselements ein Haltesegment aufweist, das bezogen auf eine Ebene senkrecht zur Längsachse des Basiselements in einem Winkel ungleich 0° angeordnet ist oder um eine Achse der Ebene schwenkbar ist, Anordnen eines zweiten Bauteils in einem Abstand zum ersten Bauteil mit darin eingesetzter Befestigungsanordnung, Einsetzen einer Befestigungsschraube durch eine Öffnung im zweiten Bauteil, bis die Befestigungsschraube in Eingriff mit der Mitschleppereinheit kommt, Drehen der Befestigungsschraube, wodurch die Verstelleinheit mitdreht, in Anlage mit dem zweiten Bauteil bewegt wird und dann mittels des Haltesegments ein Winkel zwischen dem ersten und dem zweiten Bauteil derart ausgeglichen wird, dass eine Längsachse der Befestigungsanordnung senkrecht zu einer Ebene des zweiten Bauteils verläuft, und danach Einschrauben der Befestigungsschraube in eine Befestigungsmutter. Mittels des erfindungsgemäßen Montageverfahrens ist aufgrund der Befestigungsanordnung insbesondere eine Verbindung zwischen einem ersten, einem zweiten und einem dritten Bauteil herstellbar. Im Hinblick auf die entsprechenden Vorteile, insbesondere bezüglich der Winkelausgleichsfunktion, wird auf die obigen Ausführungen verwiesen.

### 4. Kurzzusammenfassung der Zeichnungen

Nachfolgend wird die vorliegende Erfindung unter Bezugnahme auf die Zeichnungen detailliert beschrieben. Gleiche Bezugszeichen in den Zeichnungen bezeichnen dabei gleiche Bauteile und/oder Elemente. Es zeigen:
- Figur 1: eine Ansicht einer Ausführungsform einer Befestigungsanordnung ohne Winkelausgleichsfunktion,
- Figur 2: die Ausführungsform der Befestigungsanordnung gemäß Figur 1 im montierten Zustand im Querschnitt,
- Figur 3: eine erste Ansicht einer Ausführungsform einer erfindungsgemäßen Befestigungsanordnung mit Winkelausgleichsfunktion,
- Figur 4: eine zweite Ansicht der Befestigungsanordnung gemäß Figur 3,
- Figur 5: eine dritte Ansicht der Befestigungsanordnung gemäß Figur 3,
- Figur 6: eine Ansicht der Befestigungsanordnung gemäß Figur 3, die in das erste Bauteil eingesetzt ist,
- Figur 7: die Befestigungsanordnung gemäß Figur 6 im Querschnitt,
- Figur 8: die Befestigungsanordnung gemäß Figur 3 im montierten Zustand im Querschnitt,
- Figur 9: eine perspektivische Ansicht der Ausführungsform gemäß Figur 8,
- Figur 10: eine erste Ansicht einer zweiten Ausführungsformen einer erfindungsgemäßen Befestigungsanordnung in teilweiser Explosionsdarstellung,
- Figur 11: eine zweite Ansicht der Ausführungsformen gemäß Figur 10,
- Figur 12: eine dritte Ansicht der Ausführungsformen gemäß Figur 10,
- Figur 13: eine Seitenansicht einer dritte Ausführungsformen einer erfindungsgemäßen Befestigungsanordnung im montierten Zustand,
- Figur 14: eine perspektivische Ansicht der dritten Ausführungsformen der Befestigungsanordnung,
- Figur 15: einen ersten Ausschnitt eines ersten Bauteils zur Verwendung mit einer Befestigungsanordnung,
- Figur 16: einen zweiten Ausschnitt eines ersten Bauteils zur Verwendung mit einer Befestigungsanordnung,
- Figur 17: einen schematischen Verfahrensablauf einer Ausführungsform eines erfindungsgemäßen Herstellungsverfahrens und
- Figur 18: einen schematischen Verfahrensablauf einer Ausführungsform eines erfindungsgemäßen Montageverfahrens.

### 5. Detaillierte Beschreibung der bevorzugten Ausführungsformen

Nachfolgend wird eine Ausführungsform einer Befestigungsanordnung 1 ohne Winkelausgleichsfunktion detailliert beschrieben. Darauf aufbauend erfolgt dann die Beschreibung verschiedener Ausführungsformen der Befestigungsanordnung 100; 200; 300 mit Winkelausgleichsfunktion. Bei allen Befestigungsanordnungen 1; 100; 200 und 300 handelt es sich um Anordnungen zum Befestigen eines ersten Bauteils A an einem zweiten Bauteil B mit selbsttätigem Ausgleich von Toleranzen im Abstand zwischen dem ersten Bauteil A und dem zweiten Bauteil B. Insbesondere wird mittels der Befestigungsanordnungen 1; 100; 200 und 300 ein drittes Bauteil C am zweiten Bauteil B ohne zusätzliche Belastung des ersten Bauteils A befestigt. Bei dem ersten Bauteil A handelt es sich beispielsweise um eine Dachhaut, während das zweite Bauteil B eine Karosseriestruktur und das dritte Bauteil C eine Dachreling ist. Im Vergleich zum zweiten Bauteil B handelt es sich bei dem ersten Bauteil A daher um ein dünnwandiges Bauteil.

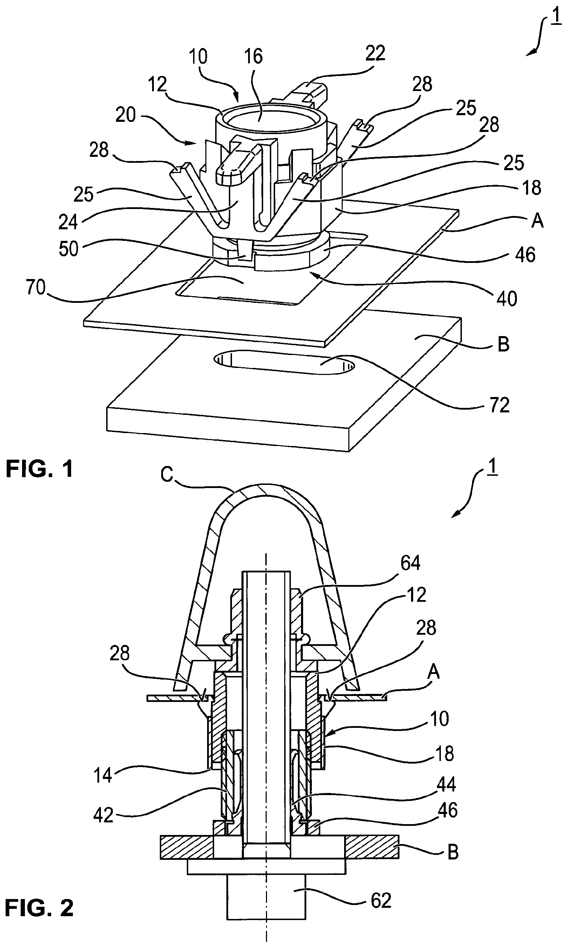

Bezug nehmend auf die Figuren 1 und 2 weist die Befestigungsanordnung 1 ein Basiselement 10 und eine in das Basiselement 10 eingeschraubte Verstelleinheit 40 auf. Das Basiselement 10 weist ein erstes axiales Ende 12, ein zweites axiales Ende 14, ein erstes Innengewinde 16 und an seiner radial äußeren Seite eine Haltestruktur 20 zum Halten des Basiselements 10 in einer Öffnung 70 des ersten Bauteils A auf. Das Innengewinde 16 wird durch eine Mutter oder Gewindehülse aus Metall oder Kunststoff bereitgestellt. Zudem weist das Basiselement 10 ein Gehäuse 18 oder einen Käfig auf, das bzw. der insbesondere aus Kunststoff besteht, die Mutter umgibt und die Haltestruktur 20 vorzugsweise als integralen Bestandteil aufweist.

Die Verstelleinheit 40 ist im Ausgangszustand in das Basiselement 10 eingeschraubt und umfasst eine Gewindehülse 42 aus Metall oder Kunststoff, die ein erstes Außengewinde der Verstelleinheit 40 bereitstellt. Das erste Außengewinde der Verstelleinheit bildet mit dem ersten Innengewinde 16 des Basiselements 10 eine erste Gewindepaarung einer ersten Gangrichtung, die insbesondere durch ein Linksgewinde definiert ist. Die Verstelleinheit 40 ist vom zweiten axialen Ende 14 des Basiselements 10 in das Basiselement 10 eingeschraubt. Mittels dieser Ausgestaltungen kann die erste Gewindepaarung aus Kunststoff oder Metall bereitgestellt werden. Im Fall von Kunststoff als Material für die erste Gewindepaarung handelt es sich dann um definierte Gewinde. Im Fall von Metall als Material für die erste Gewindepaarung sind im Vergleich zum Kunststoff höhere Kräfte durch die Befestigungsanordnung 1 aufnehmbar. Auch Materialkombinationen sind realisierbar, so dass die Befestigungsanordnung 1 spezifisch auf den jeweiligen Anwendungsfall anpassbar ist.

Weiterhin umfasst die Verstelleinheit 40 eine Mitschleppereinheit bestehend aus einem Mitschlepper 44 sowie einer Anlagescheibe 46. Der Mitschlepper 44 besteht vorzugsweise aus Kunststoff und die Anlagescheibe 46 vorzugsweise aus Metall. Durch Einpressen des Mitschleppers 44 in die Gewindehülse 42 verbindet der Mitschlepper 44 die Gewindehülse 42 und die Anlagescheibe 46 lagerichtig miteinander. Der Mitschlepper 44 wird somit mittels Presssitz in der Verstelleinheit 40 und insbesondere in der Gewindehülse 42 gehalten. Zudem weist der Mitschlepper 44 ein erstes axiales Ende auf, das bündig mit einer ersten Seite der Anlagescheibe 46 angeordnet ist. Eine zweite der ersten Seite gegenüberliegende Seite der Anlagescheibe 46 liegt an der Gewindehülse 42 an. Insbesondere mit einer Anlagescheibe 46 aus Metall ist eine gute Kraftübertragung auf das zweite Bauteil B erzielbar.

Im vollständig eingeschraubten Zustand der Verstelleinheit 40 sichert eine Konter-und/oder Transportsicherung 50 die Verstelleinheit 40 im Basiselement 10. Die Konter-und/oder Transportsicherung 50 wird durch zwei zusammenwirkende Bestandteile des Basiselements 10 und der Verstelleinheit 40 gebildet. Im dargestellten Ausführungsbeispiel besteht die Konter- und/oder Transportsicherung 50 aus einem am zweiten axialen Ende 14 des Basiselements 10 vorgesehenen Vorsprung, der mit einer an der Anlagescheibe 46 vorgesehenen radialen Aussparung zusammen wirkt. Generell sind Konter- und/oder Transportsicherung bei Befestigungsanordnungen mit Toleranzausgleichsfunktion bekannt.

Die Haltestruktur 20 umfasst benachbart zum ersten axialen Ende 12 des Basiselements 10 zwei Anlagearme 22 sowie axial beabstandet davon vier Clipsarme 25. Die Anlagearme 22 stehen radial nach außen vom Gehäuse 18 vor, sind einander gegenüberliegend angeordnet und mit einer ersten Seite des ersten Bauteils A benachbart der Öffnung 70 des ersten Bauteils A in Anlage bringbar. Eine Längsachse der Anlagearme 22 verläuft senkrecht zur Längsachse des Basiselements 10. Die Anlagearme 22 stellen bei der späteren Verwendung eine axiale Begrenzung in Einsetzrichtung bereit.

Von den vier Clipsarmen 25 sind jeweils zwei Clipsarme 25 über einen Verbindungssteg 24 mit jeweils einem Anlagearm 22 verbunden und können in Richtung des Verbindungsstegs 24 federn. Die Struktur aus den zwei über einen Verbindungssteg 24 miteinander verbundenen Clipsannen 25 wird auch als W-förmige Struktur bezeichnet. Ein Mittelsteg dieser W-förmigen Struktur, der dem Verbindungssteg 24 entspricht oder mit diesem verbunden ist, ist somit unterhalb der Anlagearme 22 angeordnet, sodass ein rechter und ein linker Schenkel der W-förmigen Struktur, d.h. ein jeweiliger Clipsarm 25, seitlich vom jeweiligen Anlagearm 22 angeordnet ist. Da die Längsachse der Anlagearme 22 senkrecht zur Längsachse des Basiselements 10 verläuft, verläuft die Längsachse des Mittelstegs der W-förmigen Struktur sowie des Verbindungsstegs 24 parallel zur Längsachse des Basiselements 10.

Jeder der Clipsarme 25 stellt eine Anlagefläche 28 für das erste Bauteil A bereit. Die Anlagearme 22 und die Clipsarme 25 sind so angeordnet, dass die Längsachse der Anlagearme 22 projeziert in die Ebene der Anlageflächen 28 der Clipsarme 25 mit einer Achse, die zwei Anlageflächen 28 von zwei zur selben W-förmigen Struktur gehörigen Clipsarmen 25 verbindet, einen Winkel von 90° bildet. Dies bedeutet, dass die mit dem ersten Bauteil A in Kontakt kommenden Flächen der Anlagearme 22 und die mit dem ersten Bauteil A in Kontakt kommenden Anlageflächen 28 der Clipsarme 25 einen Winkel von ungefähr 90° einschließen. Eine Achse, die zwei Anlageflächen 28 von benachbarten Clipsarmen 25 unterschiedlicher W-förmiger Strukturen auf dem kürzesten Weg verbindet, verläuft parallel zur Längsachse der Anlagearme 22. In Richtung zum Verbindungssteg 24 sind die Anlageflächen 28 durch einen axialen Vorsprung begrenzt, an dem bei Verwendung das erste Bauteil A ebenfalls anliegt.

Die Funktionsweise der Haltestruktur 20 wird nachfolgend anhand der Verwendung der Befestigungsanordnung 1 unter Bezugnahme auf Figur 2 erläutert. Die Befestigungsanordnung 1 wird in eine rechteckige Öffnung 70 im ersten Bauteil A in einer Einsetzrichtung eingesetzt, bis sie mit den Anlagearmen 22 auf dem ersten Bauteil A zur Anlage kommt. Das Einsetzen der Befestigungsanordnung 1 erfolgt dabei von der Seite des ersten Bauteils A, die abgewandt vom zweiten Bauteil B ist, also der später dem dritten Bauteil C zugewandten Seite des ersten Bauteils A. Das axial zweite Ende 14 des Basiselements 10 ist in Einsetzrichtung vorne angeordnet.

Während des Einsetzens der Befestigungsanordnung 1 mit entsprechend vorauseilender Verstelleinheit 40 in die Öffnung 70 im ersten Bauteil A federn die Clipsarme 25, d.h. die Schenkel der W-förmigen Struktur, zunächst nach innen. Nachdem die Clipsarme 25 durch die Öffnung 70 hindurch bewegt wurden, federn die Clipsanne 25 zurück nach außen. Die Clipsarme 25 realisieren daher eine elastische oder federnde Raststruktur, die eine formschlüssige Verbindung mit dem ersten Bauteil A realisiert. Der axiale Abstand zwischen den Anlageflächen der Anlagearme 22 und den Anlageflächen 28 der Clipsarme 25 am ersten Bauteil A ist größer als die Materialstärke des ersten Bauteils A im Bereich der Öffnung 70. Somit ist ein sicheres Einclipsen oder Einrasten auch bei leichter Wölbung des ersten Bauteils A gegeben. Auf diese Weise ist ein Spiel entlang der Längsachse der Befestigungsanordnung 1 vorhanden.

Die Anlagearme 22 stellen somit eine Begrenzung in Einsetzrichtung bereit, während die Clipsarme 25 nach dem Zurückfedern eine Begrenzung entgegen der Einsetzrichtung bereitstellen. Ein Verschieben der Befestigungsanordnung 1 innerhalb der Öffnung 70 ist mit dieser Haltestruktur 20 begrenzt realisierbar, so dass Toleranzen in dieser Ebene ausgleichbar sind. Zudem realisieren die Clipsarme 25 in Verbindung mit dem Gehäuse 18 eine verdrehsichere Anordnung der Befestigungsanordnung 1 im ersten Bauteil. Nach dem Einsetzen in das erste Bauteil A
Nach dem Einsetzen der Befestigungsanordnung 1 in das erste Bauteil A und dem Anordnen des ersten Bauteils A im Abstand zum zweiten Bauteil B ist der Bereich der Befestigungsanordnung 1 von den Anlagearmen 22 in Richtung des zweiten axialen Endes 14 des Basiselements 10 im Zwischenraum zwischen dem ersten A und dem zweiten Bauteil B angeordnet. Nun wird das dritte Bauteil C auf dem ersten Bauteil A positioniert, so dass der Bereich der Befestigungsanordnung 1 von den Anlagearmen 22 in Richtung des ersten axialen Endes 12 des Basiselements 10 vom ersten Bauteil A in Richtung des dritten Bauteils C hervorsteht. Auf diese Weise ist das erste Bauteil A mit der Befestigungsanordnung zwischen dem zweiten B und dem dritten Bauteil C angeordnet.

Eine Befestigungsschraube 60 wird durch die Öffnung 72 im zweiten Bauteil B, die ein Langloch ist, geführt und kommt in Eingriff mit dem Mitschlepper 44 der Verstelleinheit 40. Die Befestigungsschraube 60 weist ein zweites Außengewinde einer zweiten Gangrichtung auf, die der ersten Gangrichtung entgegengesetzt ist. Durch Drehen der Befestigungsschraube 60 in die zweite Gangrichtung wird die Verstelleinheit 40 aus dem Basiselement 10 geschraubt, bis die Anlagescheibe 46 in Anlage mit dem zweiten Bauteil B kommt.

Durch weiteres Drehen der Befestigungsschraube 60 wird ein Spiel zwischen den Anlageflächen 28 der Clipsarme 25 und dem ersten Bauteil A ausgeglichen. Da das erste axiale Ende 12 des Basiselements 10 axial von den Anlageflächen 28 der Clipsarme 25 beabstandet ist, liegt ein definierter Abstand zwischen dem ersten Bauteil A und dem ersten axialen Ende 12 des Basiselements 10 vor. Das erste axiale Ende 12 des Basiselements 10 stellt in diesem Zusammenhang eine Anlagefläche für eine Befestigungsmutter 64 im dritten Bauteil C bereit. Auf diese Weise ist sichergestellt, dass ein Spalt zwischen erstem Bauteil A und drittem Bauteil C konstant ist.

Eine Befestigung der Befestigungsschraube 60 erfolgt in der Befestigungsmutter 64 im dritten Bauteil C, die ein passendes Innengewinde einer zweiten Gangrichtung aufweist. Im Ergebnis wird auf diese Weise das dritte Bauteil C ausschließlich am zweiten Bauteil B befestigt, so dass das erste Bauteil A keine Last aufgrund der Befestigung aufnehmen muss. Das erste Bauteil A muss nur dem Druck einer Dichtung zwischen erstem Bauteil A und drittem Bauteil C standhalten.

Da mit dieser Befestigungsanordnung 1 jedoch kein Winkelausgleich realisierbar ist, müssen das erste A und das zweite Bauteil B zwingend parallel zueinander verlaufen.

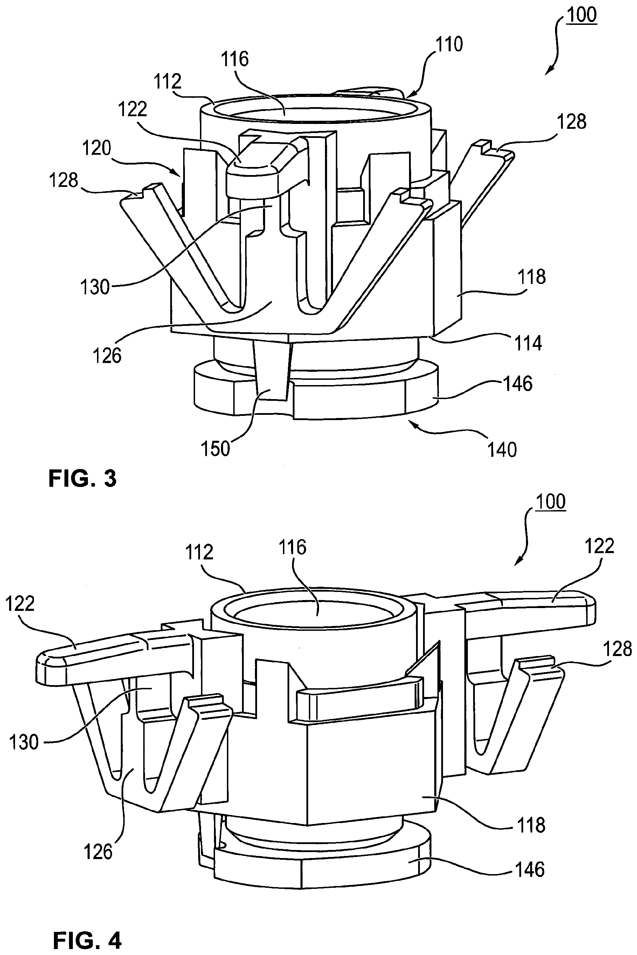

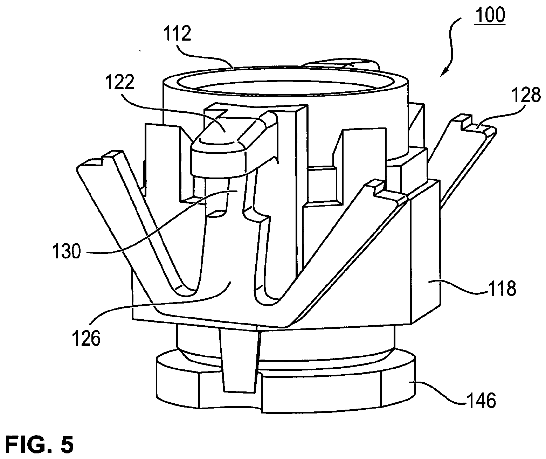

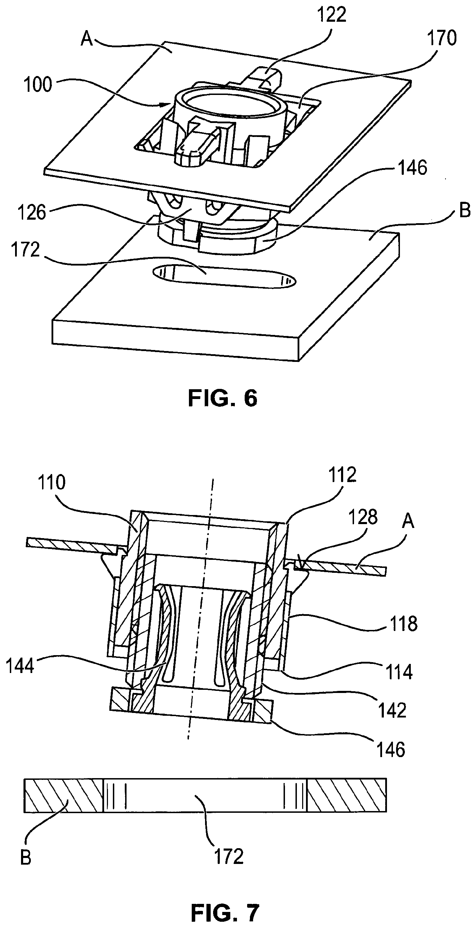

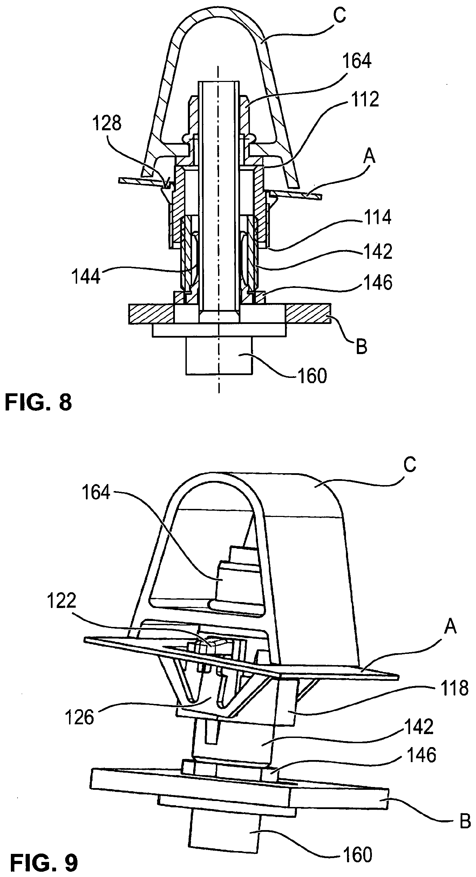

Nun bezugnehmend auf die Figuren 3 bis 9 wird eine erste Ausführungsform einer Befestigungsanordnung 100 mit Winkelausgleichsfunktion diskutiert. Der Aufbau entspricht im Wesentlichen dem oben diskutierten Aufbau, so dass nachfolgend hauptsächlich die Unterschiede zu der oben diskutierten Ausführungsform erläutert werden.

Die Befestigungsanordnung 100 weist ein Basiselement 110 mit einer darin eingeschraubten Verstelleinheit 140 auf. Der Aufbau der Verstelleinheit 140 entspricht dem Aufbau der Verstelleinheit 40. Im Hinblick auf das Basiselement 110 unterscheidet sich dieses im Aufbau der Haltestruktur 120.

Die Haltestruktur 120 weist neben den zwei Anlagearmen 122 zwei Haltesegmente 126 auf. Die Haltesegment 126 sind W-förmig und stellen eine Anlagefläche 128 für das erste Bauteil A bereit. Eine Anbindung der Haltesegmente 126 an die Anlagearme 122 erfolgt hier jedoch nicht über einen starren Verbindungssteg 24, sondern über einen elastischen Teilbereich 130, der insbesondere als Biegefeder ausgeführt ist.

Der elastische Teilbereich 130 ist einer Richtung senkrecht zur Längsachse des Basiselements und senkrecht zur Längsachse der Anlagearme 122 so dünn, dass das jeweilige Haltesegment 126 mit den Schenkeln leicht aus einer Mittellage zu bringen ist. In einer Richtung parallel zur Längsachse der Anlagearme 122 ist der elastische Teilbereich 130 so lang ausgeführt wie der übrige Bereich des Haltesegments 126 in dieser Richtung, um sicherzustellen, dass sich das jeweilige Haltesegment 126 nur um eine Achse drehen kann. Die Haltesegmente 126 sind daher um eine Achse parallel zur Längsachse der Anlagearme 122 schwenkbar. Ein Verhältnis der Materialstärke des elastischen Teilbereichs 130 in Richtung senkrecht zur Längsachse des Basiselements und senkrecht zur Längsachse der Anlagearme 122 bezogen auf die Richtung parallel zur Längsachse der Anlagearme 122 ist beispielsweise 1:2, vorzugsweise 1:2,5 und besonders bevorzugt 1:3.

Im Ausgangszustand der Befestigungsanordnung 100 sind die Anlageflächen 128 somit, wie auch bei der Befestigungsanordnung 1, in einer Ebene senkrecht zur Längsachse des Basiselements 110 angeordnet. Diese Ebene wird daher in einer Richtung durch eine zur Längsachse der Anlagearme 122 parallele Achse definiert und schließt mit der Längsachse des Basiselements 110 im Ausgangszustand einen Winkel von 90° ein.

Ein Einsetzen der Befestigungsanordnung 100 in einer Öffnung 170 im ersten Bauteil A erfolgt analog zum oben beschriebenen Einsetzen für die Befestigungsanordnung 1. Die Befestigungsanordnung 1 wird daher in die rechteckige Öffnung 170 im ersten Bauteil A eingesetzt, bis sie mit den Anlagearmen 122 auf dem ersten Bauteil A zur Anlage kommt. Wie oben erläutert ist die Form des Gehäuses 118 des Basiselements 110 so, dass das Basiselement 110 verdrehsicher in der Öffnung 170 des ersten Bauteils A gelagert und ein leichtgängiges Verschieben innerhalb der Ebene der Öffnung 170 begrenzt möglich ist, sodass Toleranzen in dieser Richtung ausgleichbar sind. Ein Abstand zwischen den Anlageflächen der Anlagearme 122 und den Anlageflächen 128 der Haltesegmente 126 ist auch hier größer als die Materialstärke des ersten Bauteils A, sodass ein sicheres Einsetzen bzw. Einclipsen oder Einrasten gegeben ist, selbst bei einer leichten Wölbung des ersten Bauteils A, also der beispielhaften Dachhaut. In dieser Ausführungsform ist die Längsachse der Befestigungsanordnung 100 nach dem Einsetzen senkrecht zur Ebene der Öffnung 170 im ersten Bauteil A ausgerichtet.

Nach dem Einsetzen der Befestigungsanordnung 1 in das erste Bauteil A und dem Anordnen des ersten Bauteils A im Abstand zum zweiten Bauteil B wird das dritte Bauteil C auf dem ersten Bauteil A positioniert. Auf diese Weise ist das erste Bauteil A mit der Befestigungsanordnung zwischen dem zweiten B und dem dritten Bauteil C angeordnet.

Eine Befestigungsschraube 160 wird durch die als Langloch ausgebildete Öffnung 172 im zweiten Bauteil B geführt und kommt in Eingriff mit dem Mitschlepper 144 der Verstelleinheit 140. Ein einfaches Einsetzen der Befestigungsschraube 160 in die Verstelleinheit 140 ist möglich, obwohl das erste Bauteil A und das zweite Bauteil B nicht parallel zueinander angeordnet sind, weil die Öffnung 172 im zweiten Bauteil B als Langloch ausgeführt ist. Die Öffnung 172 bzw. das Langloch verläuft dazu senkrecht zur Längsachse der Anlagearme 122. Zur weiteren Erleichterung kann die Befestigungsschraube 160 eine Zentrierspitze aufweisen.

Wenn die Anlagescheibe 146 der Verstelleinheit 140 nun mit dem zweiten Bauteil B anfänglich in Kontakt kommt, dann verschwenken die Haltesegmente 126 über den elastischen Teilbereich 130 bezogen auf das Gehäuse 118 bzw. die Längsachse des Basiselements 110 so weit, bis die Anlagescheibe 146 der Verstelleinheit 140 an dem zweiten Bauteil B parallel zur Anlage kommt. Auf diese Weise ist die Befestigungsanordnung 100 senkrecht zur Ebene der Öffnung 172 des zweiten Bauteils B ausgerichtet, was eine spätere Kraftübertragung vom dritten Bauteil C auf das zweite Bauteil B positiv unterstützt. Daraus folgt ebenso, dass die Haltesegmente 126, die den Winkelausgleich realisieren, an einer Kraftübertragung nicht beteiligt sind.

Durch weiteres Drehen der Befestigungsschraube 160 wird das Spiel zwischen den Anlageflächen 128 der Haltesegmente 126 und dem ersten Bauteil A ausgeglichen. Eine Befestigung der Befestigungsschraube 160 erfolgt in der Befestigungsmutter 164 im dritten Bauteil C, die ein passendes Innengewinde einer zweiten Gangrichtung aufweist. Da das Profil des dritten Bauteils C an die Kontur des ersten Bauteils A angepasst ist, hat die Anlagefläche der Befestigungsmutter 164 aufgrund der Anlage am ersten axialen Ende 112 des Basiselements 110 nun wieder eine definierte Lage zum ersten Bauteil A und es entsteht erneut ein gleichmäßiger Spalt zwischen erstem A und drittem Bauteil C.

Ein besonderer Vorteil dieser Befestigungsanordnung 100 ist, dass sie auch eingesetzt werden kann, wenn die Winkelabweichungen an verschiedenen Befestigungspunkten unterschiedlich ist.

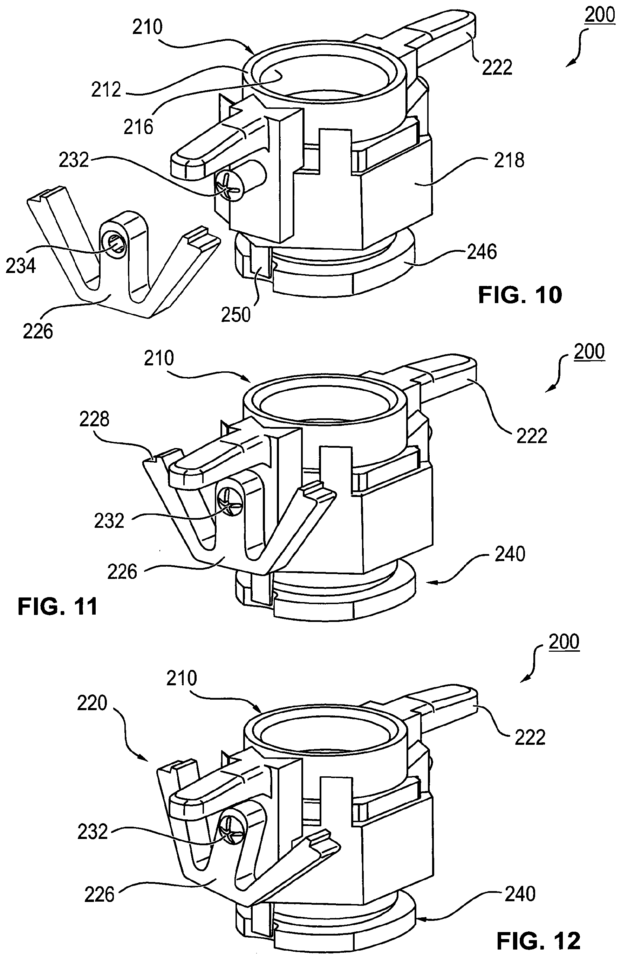

Die Figuren 10 bis 12 zeigen eine weitere Ausführungsform einer Befestigungsanordnung 200. Die Befestigungsanordnung 200 entspricht im Wesentlichen der Befestigungsanordnung 100, so dass auf die entsprechenden Ausführungen verwiesen wird.

Im Unterschied zu der obigen Ausführungen der Befestigungsanordnung 100 sind die Haltesegment 226 jedoch nicht mit den Anlagearmen 222 verbunden. Vielmehr weist das Gehäuse 218 des Basiselements 210 zwei Stifte 232 auf, die radial nach außen vorstehend am Gehäuse 218 axial beabstandet von den Anlagearmen 222 angeordnet sind. Eine Längsachse der Stifte 232 verläuft daher parallel zur Längsachse der Anlagearme 222. Die Stifte 232 weisen einen kegelstumpfförmigen Kopf und einen zylindrischen Bereich auf, wobei der Kopf entfernt vom Gehäuse 218 angeordnet ist.

Zur Befestigung der Haltesegment 226 auf den Stiften 232 ist eine entsprechende Öffnung 234 im Mittelsteg der W-förmigen Struktur vorgesehen. Die Stifte 232 und die Öffnungen 234 der Haltesegmente 226 bilden zusammen eine Clipsverbindung bzw. eine Rastverbindung, sodass die Haltesegmente 226 schwenkbaren auf den Stiften 232 haltbar sind. Aufgrund dieser Anordnung können die Haltesegmente 226 erneut nur um eine Achse schwenken. Aufgrund des kegelstumpfförmigen Kopfs der Stifte 232 ist ein Draufschieben der Haltesegmente 226 auf den Stift 232 erleichtert und ein Herunternehmen erschwert. Da die Funktionsweise der Befestigungsanordnung 200 ähnlich der oben diskutierten Befestigungsanordnung 100 ist, wird auf die entsprechenden Ausführungen verwiesen. Im Unterschied zu der oben beschriebenen Befestigungsanordnung 100 kann aufgrund der Lagerung der Haltesegmente 226 auf den Stiften 232 bereits selbsttätig ein Verschwenken bereits nach dem Einsetzen auftreten, in Abhängigkeit vom jeweiligen auszugleichenden Winkel. Ein Nachteil der Befestigungsanordnung 200 im Vergleich zur Befestigungsanordnung 100 ist die größere Teileanzahl und die daraus resultierenden höheren Kosten.

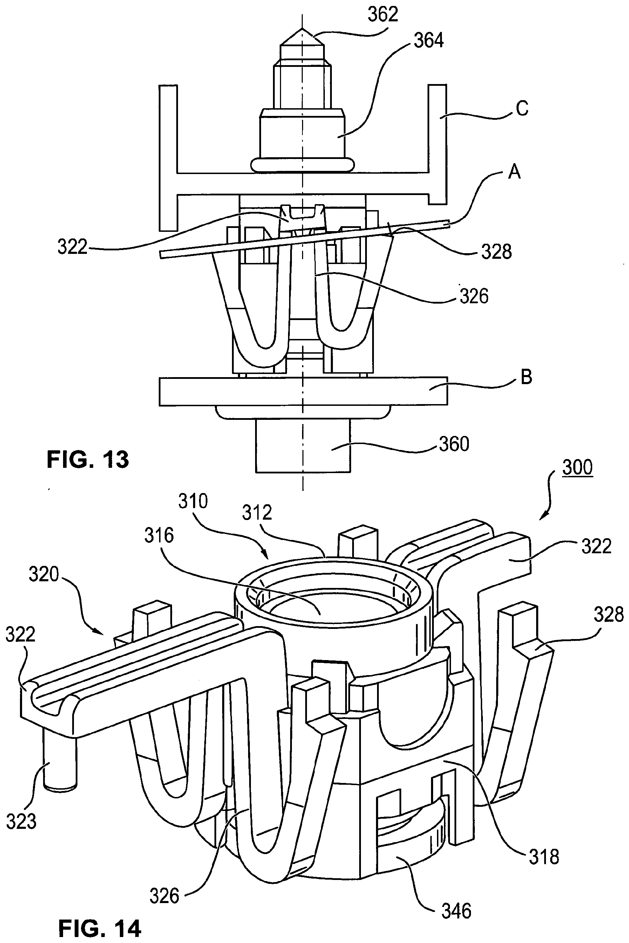

Eine weitere Ausführungsform einer Befestigungsanordnung 300 ist in den Figuren 13 und 14 gezeigt. Im Grundaufbau entspricht die Befestigungsanordnung 300 den vorher diskutierten Befestigungsanordnung 1; 100 und 200. Allerdings unterscheidet sich die Befestigungsanordnung 300 von den anderen Befestigungsanordnungen 1; 100 und 200 dadurch, dass die Haltesegmente 326 bereits in einem festen Winkel bezogen auf die Längsachse des Basiselements 310 angeordnet sind, sodass die Anlageflächen 328 der Haltesegment 326 ebenfalls einen festen Winkel definieren. Die Anlageflächen 328 der Haltesegmente 326 liegen daher in einer Ebene, die in einer Richtung durch eine zur Längsachse der Anlagearme 322 parallele Achse definiert wird und die mit der Längsachse des Basiselements 310 einen Winkel ungleich 90° einschließt.

Ein Unterschied bei der Verwendung einer solchen Befestigungsanordnung 300 ist, dass die Längsachse des Basiselements 310 bereits beim Einsetzen in das erste Bauteil A senkrecht zur Ebene der Öffnung im zweiten Bauteil ausgerichtet ist. Daher ist die Befestigungsschraube 360, die in dieser Ausführungsform mit Zentrierspitze 362 dargestellt ist, besonders einfach in die Befestigungsanordnung 300 einsetzbar.

Eine Voraussetzung für die wirtschaftliche Verwendung einer solchen Befestigungsanordnung 300 ist, dass die Winkelabweichung an einer Mehrzahl von Befestigungspunkt annähernd gleich ist. Um die Befestigungsanordnung 300 bezogen auf die Dachhaut als erstes Bauteil A sowohl rechts als auch links einzusetzen, weist einer der beiden Anlagearmen 322 einen angespritzten Zentrierstift 323 auf. Dieses Vorgehen ist besonders vorteilhaft, wenn der Winkel des ersten Bauteils bezogen auf das zweite Bauteil an beiden Seiten vom Betrag her gleich ist.

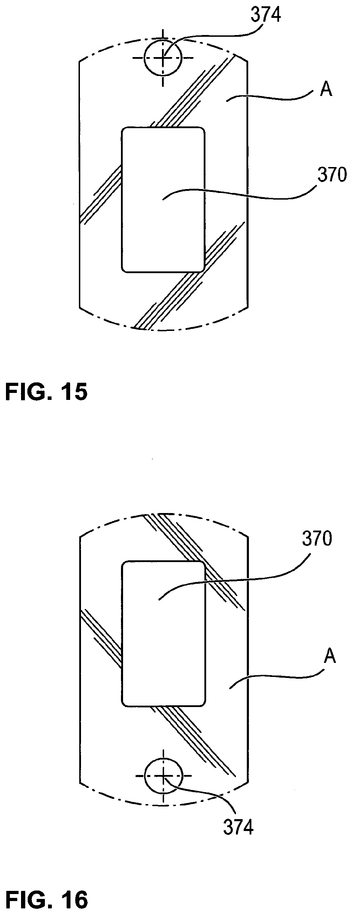

Der Zentrierstift 323 erstreckt sich vom radial äußeren Ende des Anlagearms 322 in Richtung des zweiten axialen Endes des Basiselements 310 und schließt vorzugsweise mit dem Anlagearm 322 einen Winkel von 90° ein. Um die lagerichtige Positionierung im ersten Bauteil A sicherzustellen, weist das erste Bauteil A daher eine entsprechende Zentrieröffnung 374 auf. Dies ist für die beiden Seiten einer Dachhaut als erstes Bauteil A in den Figuren 15 und 16 exemplarisch gezeigt.

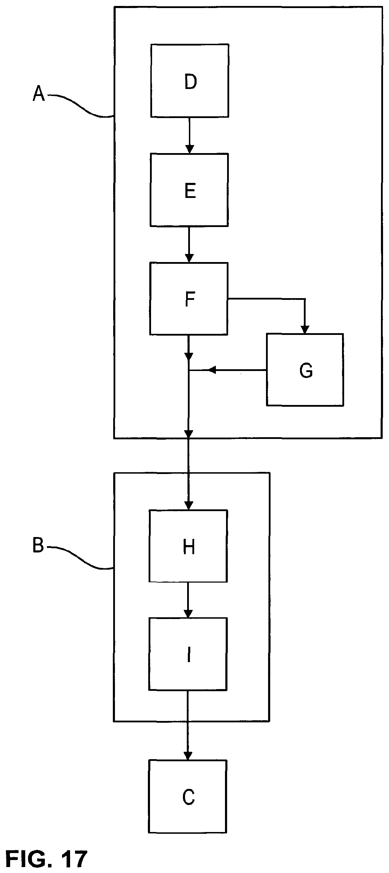

Nun Bezug nehmend auf Figur 17 wird ein schematischer Verfahrensablauf einer Ausführungsform eines erfindungsgemäßen Herstellungsverfahrens erläutert. Zunächst wird in einem ersten Schritt A ein Basiselement 110; 210; 310 mit einem ersten 112; 212; 312 und einem zweiten axialen Ende 114 bereitgestellt, das an einer radial äußeren Seite eine Haltestruktur 120; 220; 320 zum Halten des Basiselements 110; 210; 310 in einer Öffnung 170; 370 des ersten Bauteils A aufweist.

Der Schritt A des Bereitstellens des Basiselements 110; 210; 310 kann dabei folgende weitere Schritte aufweisen. Beispielsweise kann in Schritt D ein Bereitstellen einer Mutter und Anordnen der Mutter in einem Gehäusematerial des Basiselements 110; 210; 310 erfolgen, insbesondere mittels Einbetten in einen Kunststoff. Die Mutter kann aus Metall oder Kunststoff bestehen. Das Gehäuse 118; 218; 318 umfasst die Haltestruktur 120; 220; 320, vorzugsweise als integralen Bestandteil. Daher kann in Schritt E ein Bereitstellen der Haltestruktur 120; 220; 320 des Basiselements 110; 210; 310 mit zwei Anlagearmen 122; 222; 322 benachbart zum ersten axialen Ende 112; 212; 312 des Basiselements 110; 210; 310 vorgesehen werden, so dass die Anlagearme 112; 212; 312 mit einer ersten Seite des ersten Bauteils A benachbart der Öffnung 170; 370 des ersten Bauteils A in Anlage bringbar sind, wobei die Anlagearme 122; 222; 322 vorzugsweise einander gegenüberliegend angeordnet sind.

Alternativ oder zusätzlich ist es bevorzugt, dass in Schritt F ein Bereitstellen von zwei Haltesegmenten 126; 226; 326 erfolgt, die insbesondere W-förmig sind und die eine Anlagefläche 128; 228; 328 axial beabstandet vom ersten axialen Ende 112; 212; 312 des Basiselements 110; 210; 310 bereitstellen, so dass die Anlagefläche 128; 228; 328 mit einer zweiten Seite des ersten Bauteils A benachbart der Öffnung 170; 370 des ersten Bauteils A in Anlage bringbar ist. Im Hinblick auf die Anordnung der schwenkbaren Haltesegmente 126; 226 am Basiselement sind zwei alternative Befestigungsmöglichkeiten zu unterscheiden. In einer ersten Alternative, und sofern die Anlagearmen 122 vorhanden sind, ist es bevorzugt, dass jedes der Haltesegmente 126 über einen elastischen Teilbereich 130, insbesondere eine Biegefeder, an einem der Anlagearme 122 angeordnet ist. In einer zweiten Alternative weist das Basiselement 210 axial beabstandet vom ersten axialen Ende 212 jeweils einen radial nach außen vorstehenden Stift 232 auf und die Haltesegmente 226 weisen jeweils eine Öffnung 234 auf, so dass das Verfahren den weiteren Schritt G des Anordnens der Haltesegmente 226 auf dem Stift 232 umfasst.

Nach, vor oder gleichzeitig mit dem Bereitstellen des Basiselements 110; 210; 310 erfolgt in Schritt B ein Bereitstellen einer Verstelleinheit 140; 240 mit einer Mitschleppereinheit. Das Basiselement 110; 210; 310 weist ein erstes Innengewinde 116; 216; 316 und die Verstelleinheit 140; 240 ein erstes Außengewinde auf, wobei das erste Außengewinde der Verstelleinheit 140; 240 mit dem ersten Innengewinde des Basiselements 110; 210; 310 eine erste Gewindepaarung einer ersten Gangrichtung bildet. Der Schritt des Bereitstellens der Verstelleinheit 140; 240 kann dabei folgende weitere Schritte aufweisen. Zunächst kann in Schritt H ein Bereitstellen einer Gewindehülse 142 und einer Mitschleppereinheit erfolgen, die eine Anlagescheibe 146; 246; 346, vorzugsweise aus Metall, und einen Mitschlepper 144 aufweist, vorzugsweise aus Kunststoff. In diesem Fall ist der weitere Schritt I vorgesehen: Einpressen des Mitschleppers 144 in die in das Basiselement 110; 210; 310 eingeschraubte Gewindehülse 142, so dass eine Anlagescheibe 146; 246; 346 mit einer ersten Seite bündig mit einem ersten Ende des Mitschleppers 144 abschließt und mit einer der ersten Seite entgegengesetzten zweiten Seite an der Gewindehülse 142 anliegt. Hieraus ergibt sich, dass die Gewindehülse 142 vor dem Einpressen des Mitschleppers 144 in die Gewindehülse 142 bereits in das Basiselement 110; 210; 310 eingeschraubt ist. Dies wird unten detailliert erläutert. Auf diese Weise kann die Mitschleppereinheit bzw. der Mitschlepper 144 aus Kunststoff bereitgestellt werden, wobei vorzugsweise die Gewindehülse 142 ebenfalls aus Kunststoff besteht.

Abschließend erfolgt in Schritt C ein Einschrauben der Verstelleinheit 140; 240 vom zweiten axialen Ende 114 des Basiselements 110; 210; 310 her in das Basiselement 110; 210; 310. Das Einschrauben der Verstelleinheit 140; 240 in das Basiselement 110; 210; 310 erfolgte über die erste Gewindepaarung der ersten Gangrichtung. Bei dieser ersten Gangrichtung handelt es sich beispielsweise um ein Linksgewinde, während die zweite Gangrichtung durch ein Rechtsgewinde definiert ist. Vorteilhafterweise weisen das Basiselement 110; 210; 310 und die Verstelleinheit 140; 240 zusammenwirkende Strukturen auf, die eine Konter- und/oder Transportsicherung im eingeschraubten Zustand der Verstelleinheit 140; 240 bilden.

Insbesondere im Hinblick auf spanend hergestellte Gewinde der ersten Gewindepaarung, d.h. bei einer Mutter aus Metall und einer Gewindehülse 142 aus Metall, ist eine alternative Vorgehensweise bevorzugt. Nach dem Bereitstellen des Basiselements 110; 210; 310 und dem Bereitstellen der Verstelleinheit 140; 240, insbesondere der getrennten Bauteile Gewindehülse 142, Mitschlepper 144 und Anlagescheibe 146; 246; 346, wird die Gewindehülse 142 bis auf eine definierte Höhe in das Basiselement 110; 210; 310 eingeschraubt. Die definierte Höhe ergibt sich beispielsweise aus einem späteren Zusammenwirken der Elemente der Konter- und/oder Transportsicherung. Nun wird die Anlagescheibe 146 mit der Gewindehülse 142 lagerichtig, d.h. die Transportsicherung befindet sich im Eingriff, verbunden. Hierzu wird der Mitschlepper 144 in die Gewindehülse 142 eingepresst. Die jeweilige Verstelleinheit 140; 240 und das jeweilige Basiselement 110; 210; 310 sind somit exakt aufeinander abgestimmt.

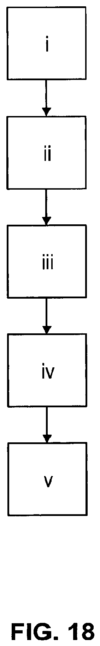

Nun auf Figur 18 Bezug nehmend wird ein schematischer Verfahrensablauf einer Ausführungsform eines erfindungsgemäßen Montageverfahrens erläutert. In Schritt i erfolgt ein Einsetzen der Befestigungsanordnung 100; 200; 300 in eine erste Öffnung 170; 370 eines ersten Bauteils A. Die Befestigungsanordnung 100; 200; 300 umfasst hierbei ein Basiselement 110; 210; 310 mit einem ersten 112; 212; 312 und einem zweiten axialen Ende 114, das an einer radial äußeren Seite eine Haltestruktur 120; 220; 320 zum Halten des Basiselements 110; 210; 310 in der ersten Öffnung 170; 370 des ersten Bauteils A aufweist, und eine in das Basiselement 110; 210; 310 einschraubbare Verstelleinheit 140; 240 mit einer darin eingesetzten Mitschleppereinheit. Die Haltestruktur 120; 220; 320 des Basiselements 110; 210; 310 weist ein Haltesegment 126; 226; 326 auf, das bezogen auf eine Ebene senkrecht zur Längsachse des Basiselements 110; 210; 310 in einem Winkel angeordnet ist oder um eine Achse der Ebene schwenkbar ist.

In einem zweiten Schritt ii erfolgt ein Anordnen eines zweiten Bauteils B in einem Abstand zum ersten Bauteil A mit darin eingesetzter Befestigungsanordnung 100; 200; 300. Danach erfolgt in Schritt iii ein Einsetzen einer Befestigungsschraube 160; 360 durch eine Öffnung 172 im zweiten Bauteil B, bis die Befestigungsschraube 160; 360 in Eingriff mit der Mitschleppereinheit kommt. Nun folgt in Schritt iv ein Drehen der Befestigungsschraube 160; 360, wodurch die Verstelleinheit 140; 240 mitdreht, in Anlage mit dem zweiten Bauteil B bewegt wird und dann mittels des Haltesegments 126; 226; 326 ein Winkel zwischen dem ersten A und dem zweiten Bauteil B derart ausgeglichen wird, dass eine Längsachse der Befestigungsanordnung 100; 200; 300 senkrecht zu einer Ebene des zweiten Bauteils B verläuft. Abschließend findet in Schritt v ein Einschrauben der Befestigungsschraube 160; 360 in eine Befestigungsmutter 164; 364 statt.

### 6. Bezugszeichenliste

- A: erstes Bauteil
- B: zweites Bauteil
- C: drittes Bauteil

- 1: Befestigungsanordnung
- 10: Basiselement
- 12: erstes axiales Ende
- 14: zweites axiales Ende
- 16: Innengewinde
- 18: Gehäuse
- 20: Haltestruktur
- 22: Anlagearm
- 24: Verbindungssteg
- 25: Clipsarm
- 28: Anlagefläche des Clipsarms 25
- 40: Verstelleinheit
- 42: Gewindehülse
- 44: Mitschlepper
- 46: Anlagescheibe
- 50: Konter- und/oder Transportsicherung
- 60: Befestigungsschraube
- 64: Befestigungsmutter
- 70: Öffnung im ersten Bauteil A
- 72: Öffnung im zweiten Bauteil B

- 100: Befestigungsanordnung
- 110: Basiselement
- 112: erstes axiales Ende
- 114: zweites axiales Ende
- 116: Innengewinde
- 118: Gehäuse
- 120: Haltestruktur
- 122: Anlagearm
- 126: Haltesegment
- 128: Anlagefläche des Haltesegments 126
- 130: elastischer Teilbereich
- 140: Verstelleinheit
- 142: Gewindehülse
- 144: Mitschlepper
- 146: Anlagescheibe
- 150: Konter- und/oder Transportsicherung
- 160: Befestigungsschraube
- 164: Befestigungsmutter
- 170: Öffnung im ersten Bauteil A
- 172: Öffnung im zweiten Bauteil B

- 200: Befestigungsanordnung
- 210: Basiselement
- 212: erstes axiales Ende
- 216: Innengewinde
- 218: Gehäuse
- 220: Haltestruktur
- 222: Anlagearm
- 226: Haltesegment
- 228: Anlagefläche des Haltesegments 226
- 232: Stift
- 234: Öffnung des Haltesegments 226
- 240: Verstelleinheit
- 246: Anlagescheibe
- 250: Konter- und/oder Transportsicherung

- 300: Befestigungsanordnung
- 310: Basiselement
- 312: erstes axiales Ende
- 316: Innengewinde
- 318: Gehäuse
- 320: Haltestruktur
- 322: Anlagearm
- 323: Zentrierstift
- 326: Haltesegment
- 328: Anlagefläche des Haltesegments 326
- 346: Anlagescheibe
- 360: Befestigungsschraube
- 362: Zentrierspitze der Befestigungsschraube 360
- 364: Befestigungsmutter
- 370: Öffnung im ersten Bauteil A
- 374: Zentrieröffnung im ersten Bauteil

## Patentansprüche

1. Befestigungsanordnung (100; 200; 300) zum Befestigen eines ersten Bauteils (A) an einem zweiten Bauteil (B) mit selbsttätigem Ausgleich von Toleranzen im Abstand zwischen dem ersten Bauteil (A) und dem zweiten Bauteil (B), die die folgenden Merkmale aufweist:
a. ein Basiselement (110; 210; 310) mit einem ersten (112; 212; 312) und einem zweiten axialen Ende (114) sowie einer Haltestruktur (120; 220; 320) an einer radial äußeren Seite zum Halten des Basiselements (110; 210; 310) in einer Öffnung (170; 370) des ersten Bauteils (A), und die Befestigungsanordnung (100; 200; 300) ist **dadurch gekennzeichnet, dass** sie weiterhin umfasst:
b. eine in das Basiselement (110; 210; 310) einschraubbare Verstelleinheit (140; 240) mit einer darin eingesetzten Mitschleppereinheit, während
c. eine Befestigungsschraube (160; 360) mit der Verstelleinheit (140; 240) über die Mitschleppereinheit durch eine lösbare Mitschleppverbindung verbindbar ist, so dass bei einem Drehen der Befestigungsschraube (160; 360) die Verstelleinheit (140; 240) mitdrehbar und in Anlage mit dem zweiten Bauteil (B) bewegbar ist, wobei
d. die Haltestruktur (120; 220; 320) des Basiselements (110; 210; 310) ein Haltesegment (126; 226; 326) aufweist, das bezogen auf eine Ebene senkrecht zur Längsachse des Basiselements (110; 210; 310)
d1. in einem Winkel ungleich 0° angeordnet ist oder
d2. um eine Achse der Ebene schwenkbar ist, so dass
mittels des Haltesegments (126; 226; 326) ein Winkel zwischen dem ersten (A) und dem zweiten Bauteil (B) derart ausgleichbar ist, dass bei Anlage der Verstelleinheit (140; 240) am zweiten Bauteil (B) eine Längsachse der Befestigungsanordnung (100; 200; 300) senkrecht zu einer Ebene des zweiten Bauteils (B) verläuft.

2. Befestigungsanordnung (100; 200; 300) gemäß Patentanspruch 1, in der das Basiselement (110; 210; 310) ein erstes Innengewinde (116; 216; 316) und die Verstelleinheit (140; 240) ein erstes Außengewinde aufweist, wobei das erste Außengewinde der Verstelleinheit (140; 240) mit dem ersten Innengewinde (116; 216; 316) des Basiselements (110; 210; 310) eine erste Gewindepaarung einer ersten Gangrichtung bildet und die Verstelleinheit (140; 240) ist vom zweiten axialen Ende (114) des Basiselements (110; 210; 310) her in das Basiselement (110; 210; 310) einschraubbar, und
die Befestigungsschraube (160; 360) weist ein zweites Außengewinde einer zweiten Gangrichtung auf, die der ersten Gangrichtung entgegengesetzt ist, und ist durch eine Öffnung des Basiselements (110; 210; 310) und der Verstelleinheit (140; 240) einsetzbar, so dass die Verstelleinheit (140; 240) durch Drehen der Befestigungsschraube (160; 360) in die zweite Gangrichtung in Anlage mit dem zweiten Bauteil (B) bewegbar ist.

3. Befestigungsanordnung (100; 200; 300) gemäß einem der vorhergehenden Patentansprüche, in der die Haltestruktur (120; 220; 320) des Basiselements (110; 210; 310) zwei Anlagearme (122; 222; 322) benachbart zum ersten axialen Ende (112; 212; 312) aufweist, so dass die Anlagearme (122; 222; 322) mit einer ersten Seite des ersten Bauteils (A) benachbart der Öffnung (170; 370) des ersten Bauteils (A) in Anlage bringbar sind.

4. Befestigungsanordnung (100; 200; 300) gemäß einem der vorhergehenden Patentansprüche, die zwei Haltesegmente (126; 226; 326) aufweist, die insbesondere W-förmig sind und die eine Anlagefläche (128; 228; 328) axial beabstandet vom ersten axialen Ende (112; 212; 312) des Basiselements (110; 210; 310) bereitstellen, so dass die Anlagefläche (128; 228; 328) mit einer zweiten Seite des ersten Bauteils (A) benachbart der Öffnung (170; 370) des ersten Bauteils (A) in Anlage bringbar sind.

5. Befestigungsanordnung (100; 200) gemäß Patentanspruch 4, wobei
a) die Haltestruktur (120) des Basiselements (110) zwei Anlagearme (122) benachbart zum ersten axialen Ende (112) aufweist, so dass die Anlagearme (122) mit einer ersten Seite des ersten Bauteils (A) benachbart der Öffnung (170) des ersten Bauteils (A) in Anlage bringbar sind, und in der jedes der Haltesegmente (126) über einen elastischen Teilbereich (130), insbesondere eine Biegefeder, an einem der Anlagearme (122) angeordnet ist, oder
b) die Befestigungsanordnung (200) axial beabstandet vom ersten axialen Ende (212) des Basiselements (210) jeweils einen vom Basiselement (210) radial nach außen vorstehenden Stift (232) aufweist.

6. Befestigungsanordnung (200) gemäß Patentanspruch 5, zweite Alternative, in der die Haltesegmente (226) jeweils eine Öffnung (234) aufweisen, so dass die Haltesegmente (226) auf den Stift (232) clipsbar und dort frei schwenkbar anordenbar sind.

7. Befestigungsanordnung (100; 200; 300) gemäß einem der vorhergehenden Patentansprüche, in der das Basiselement (110; 210; 310) ein Gehäuse (118; 218; 318), insbesondere aus Kunststoff, sowie eine darin angeordnete, insbesondere eingebettete, Mutter aufweist, die das erste Innengewinde (116; 216; 316) bereitstellt.

8. Befestigungsanordnung (100; 200; 300) gemäß einem der vorhergehenden Patentansprüche, in der
a) die Mitschleppereinheit einen Mitschlepper (144), vorzugsweise aus Kunststoff, sowie eine Anlagescheibe (146; 246; 346) umfasst, vorzugsweise aus Metall, wobei der Mitschlepper (144) mittels Presssitz in der Verstelleinheit (140; 240) gehalten ist, und/oder
b) das Basiselement (110; 210; 310) und die Verstelleinheit (140; 240) zusammenwirkende Strukturen aufweisen, die im eingeschraubten Zustand der Verstelleinheit (140; 240) eine Konter- und/oder Transportsicherung (150; 250) bilden.

9. Befestigungsanordnung (100; 200; 300) gemäß Patentanspruch 8, erste Alternative, in der der Mitschlepper (144) ein erstes und ein zweites axiales Ende aufweist, wobei das erste axiale Ende bündig mit einer ersten Seite der Anlagescheibe (146; 246; 346) angeordnet ist und eine zweite der ersten Seite gegenüberliegende Seite der Anlagescheibe (146; 246; 346) liegt an der Verstelleinheit (140; 240) an.

10. Ein erstes Bauteil (A) in Kombination mit einer Befestigungsanordnung (100; 200; 300) gemäß einem der vorhergehenden Patentansprüche, wobei die Befestigungsanordnung (100; 200; 300) insbesondere in eine Öffnung (170; 370) des ersten Bauteils (A) eingeclipst ist.

11. Ein erstes (A) und ein zweites Bauteil (B), die über die Befestigungsanordnung (100; 200; 300) gemäß einem der Patentansprüche 1 bis 9 und mittels einer Befestigungsschraube (160; 360) aneinander befestigt sind.

12. Das erste (A) und das zweite Bauteil (B) gemäß Patentanspruch 11, wobei die Befestigungsschraube (160; 360) in eine Befestigungsmutter eingeschraubt ist, die an einem dritten Bauteil (C) angeordnet ist, während das erste Bauteil (A) eine Dachhaut, das zweite Bauteil (B) eine Karosseriestruktur und das dritte Bauteil (C) eine Dachreling ist.

13. Herstellungsverfahren einer Befestigungsanordnung (100; 200; 300) gemäß einem der Patentansprüche 1 bis 9, **gekennzeichnet durch** die folgenden Schritte:
a. Bereitstellen eines Basiselements (110; 210; 310) mit einem ersten (112; 212; 312) und einem zweiten axialen Ende (114), das an einer radial äußeren Seite eine Haltestruktur (120; 220; 320) zum Halten des Basiselements (110; 210; 310) in einer Öffnung (170; 370) des ersten Bauteils (A) aufweist,
b. Bereitstellen einer Verstelleinheit (140; 240) mit einer Mitschleppereinheit,
c. Einschrauben der Verstelleinheit (140; 240) vom zweiten axialen Ende (114) des Basiselements (110; 210; 310) her in das Basiselement (110; 210; 310).

14. Herstellungsverfahren gemäß Patentanspruch 13, in dem der Schritt des Bereitstellens des Basiselements (110; 210; 310) aufweist:
d. Bereitstellen der Haltestruktur (120; 220; 320) des Basiselements (110; 210; 310) mit zwei Anlagearmen (122; 222; 322) benachbart zum ersten axialen Ende (112; 212; 312) des Basiselements (110; 210; 310), so dass die Anlagearme (122; 222; 322) mit einer ersten Seite des ersten Bauteils (A) benachbart der Öffnung (170; 370) des ersten Bauteils (A) in Anlage bringbar sind, wobei die Anlagearme (122; 222; 322) vorzugsweise einander gegenüberliegend angeordnet sind, und/oder
e. Bereitstellen von zwei Haltesegmenten (126; 226; 326), die insbesondere W-förmig sind und die eine Anlagefläche (128; 228; 328) axial beabstandet vom ersten axialen Ende (112; 212; 312) des Basiselements (110; 210; 310) bereitstellen, so dass die Anlagefläche (128; 228; 328) mit einer zweiten Seite des ersten Bauteils (A) benachbart der Öffnung (170; 370) des ersten Bauteils (A) in Anlage bringbar ist.

15. Herstellungsverfahren gemäß Patentanspruch 14, zweite Alternative, wobei
f. jedes der Haltesegmente (126) über einen elastischen Teilbereich (130), insbesondere eine Biegefeder, an einem der Anlagearme (122) angeordnet ist oder
g. das Basiselement (210) weist axial beabstandet vom ersten axialen Ende (212) jeweils einen radial nach außen vorstehenden Stift (232) auf und die Haltesegmente (226) weisen jeweils eine Öffnung (234) auf, so dass das Verfahren den weiteren Schritt des Anordnens der Haltesegmente (226) auf dem Stift (232) umfasst.

16. Herstellungsverfahren gemäß einem der Patentansprüche 13 bis 15, wobei der Schritt des Bereitstellens des Basiselements (110; 210; 310) umfasst:
d. Bereitstellen einer Mutter und Anordnen der Mutter in einem Gehäusematerial des Basiselements (110; 210; 310), insbesondere mittels Einbetten in einen Kunststoff, und/oder
der Schritt des Bereitstellens der Verstelleinheit (140; 240) umfasst:
e. Bereitstellen einer Gewindehülse und einer Mitschleppereinheit umfassend eine Anlagescheibe (146; 246; 346), vorzugsweise aus Metall, und eines Mitschleppers (144), vorzugsweise aus Kunststoff.

17. Herstellungsverfahren gemäß Patentanspruch 16, zweite Alternative, mit dem weiteren Schritt:
f. Einpressen des Mitschleppers (144) in die in das Basiselement (110; 210; 310) eingeschraubte Gewindehülse, so dass eine Anlagescheibe (146; 246; 346) mit einer ersten Seite bündig mit einem ersten Ende des Mitschleppers (144) abschließt und mit einer der ersten Seite entgegengesetzten zweiten Seite an der Gewindehülse anliegt.

18. Montageverfahren einer Befestigungsanordnung (100; 200; 300), insbesondere einer Befestigungsanordnung (100; 200; 300) gemäß einem der Patentansprüche 1 bis 9, **gekennzeichnet durch** die Schritte:
a. Einsetzen der Befestigungsanordnung (100; 200; 300) in eine erste Öffnung (170; 370) eines ersten Bauteils (A), wobei die Befestigungsanordnung (100; 200; 300) aufweist ein Basiselement (110; 210; 310) mit einem ersten (112; 212; 312) und einem zweiten axialen Ende (114), das an einer radial äußeren Seite eine Haltestruktur (120; 220; 320) zum Halten des Basiselements (110; 210; 310) in der ersten Öffnung (170; 370) des ersten Bauteils (A) aufweist, und
eine in das Basiselement (110; 210; 310) einschraubbare Verstelleinheit (140; 240) mit einer darin eingesetzten Mitschleppereinheit, wobei
die Haltestruktur (120; 220; 320) des Basiselements (110; 210; 310) ein Haltesegment (126; 226; 326) aufweist, das bezogen auf eine Ebene senkrecht zur Längsachse des Basiselements (110; 210; 310) in einem Winkel ungleich 0° angeordnet ist oder um eine Achse der Ebene schwenkbar ist,
b. Anordnen eines zweiten Bauteils (B) in einem Abstand zum ersten Bauteil (A) mit darin eingesetzter Befestigungsanordnung (100; 200; 300),
c. Einsetzen einer Befestigungsschraube (160; 360) durch eine Öffnung (172) im zweiten Bauteil (B), bis die Befestigungsschraube (160; 360) in Eingriff mit der Mitschleppereinheit kommt,
d. Drehen der Befestigungsschraube (160; 360), wodurch die Verstelleinheit (140; 240) mitdreht, in Anlage mit dem zweiten Bauteil (B) bewegt wird und dann mittels des Haltesegments (126; 226; 326) ein Winkel zwischen dem ersten und dem zweiten Bauteil (B) derart ausgeglichen wird, dass eine Längsachse der Befestigungsanordnung (100; 200; 300) senkrecht zu einer Ebene des zweiten Bauteils (B) verläuft, und danach
e. Einschrauben der Befestigungsschraube (160; 360) in eine Befestigungsmutter.

## Claims

1. Fastening arrangement (100; 200; 300) for fastening a first component (A) to a second component (B) with automatic compensation of tolerances in the distance between the first component (A) and the second component (B), comprising the following features:
a. a base element (110; 210; 310) with a first (112; 212; 312) and a second axial end (114) as well as a holding structure (120; 220; 320) at a radial outer side for holding the base element (110; 210; 310) in an opening (170; 370) of the first component (A), and the fastening arrangement (100; 200; 300) is **characterized in that** it further comprises:
b. an adjusting unit (140; 240) which can be screwed into the base element (110; 210; 310) with a dragging unit inserted therein, while
c. a fastening screw (160; 360) is connectable with the adjusting unit (140; 240) via the dragging unit by means of a releasable dragging connection, so that when rotating the fastening screw (160; 360), the adjusting unit (140; 240) is conjointly rotatable and movable into abutment with the second component (B), wherein
d. the holding structure (120; 220; 320) of the base element (110; 210; 310) comprises a holding segment (126; 226; 326) which, with respect to a plane perpendicular to the longitudinal axis of the base element (110; 210; 310)
d1. is arranged at an angle unequal 0° or
d2. is pivotable about an axis of the plane, so that
by means of the holding segment (126; 226; 326), an angle between the first (A) and the second component (B) is compensable such that when the adjusting unit (140; 240) abuts the second component (B), a longitudinal axis of the fastening arrangement (100; 200; 300) extends perpendicular to a plane of the second component (B).

2. Fastening arrangement (100; 200; 300) according to claim 1, in which
the base element (110; 210; 310) comprises a first inner thread (116; 216; 316) and the adjusting unit (140; 240) comprises a first outer thread, wherein the first outer thread of the adjusting unit (140; 240) together with the first inner thread (116; 216; 316) of the base element (110; 210; 310) form a first thread pairing of a first thread direction and the adjusting unit (140; 240) is screwable into the base element (110; 210; 310) from the second axial end (114) of the base element (110; 210; 310), and
the fastening screw (160; 360) comprises a second outer thread of a second thread direction, which is contrary to the first thread direction, and is insertable through an opening of the base element (110; 210; 310) and the adjusting unit (140; 240), so that the adjusting unit (140; 240) is movable in abutment with the second component (B) by rotating the fastening screw (160; 360) in the second thread direction.

3. Fastening arrangement (100; 200; 300) according to one of the preceding claims, in which the holding structure (120; 220; 320) of the base element (110; 210; 310) comprises two attachment arms (122; 222; 322) adjacent to the first axial end (112; 212; 312), so that the attachment arms (122; 222; 322) are engageable with a first side of the first component (A) adjacent to the opening (170; 370) of the first component (A).

4. Fastening arrangement (100; 200; 300) according to one of the preceding claims, comprising two holding segments (126; 226; 326) which are in particular W-shaped and which provide an attachment surface (128; 228; 328) axially spaced from the first axial end (112; 212; 312) of the base element (110; 210; 310), so that the attachment surface (128; 228; 328) is engageable with a second side of the first component (A) adjacent to the opening (170; 370) of the first component (A).

5. Fastening arrangement (100; 200) according to claim 4, wherein
a) the holding structure (120) of the base element (110) comprises two attachment arms (122) adjacent to the first axial end (112) so that the attachment arms (122) are engageable with a first side of the first component (A) adjacent to the opening (170) of the first component (A) and in which each of the holding segments (126) is arranged via an elastic partial portion (130), in particular a bending spring, at one of the attachment arms (122), or
b) the fastening arrangement (200) comprises axially spaced from the first axial end (212) of the fastening element (210) a pin (232) radially protruding to the outside from the base element (210).

6. Fastening arrangement (200) according to claim 5, second alternative, in which the holding segments (226) each comprise an opening (234), so that the holding segments (226) are snappable onto the pin (232) and arrangeable there in a freely pivotable manner.

7. Fastening arrangement (100; 200; 300) according to one of the preceding claims, in which the base element (110; 210; 310) comprises a housing (118; 218; 318), in particular out of plastic material, as well as a nut that is arranged, in particular embedded, therein and which provides the first inner thread (116; 216; 316).

8. Fastening arrangement (100; 200; 300) according to one of the preceding claims, in which
a) the dragging unit comprises a dragging element (144), preferably out of plastic material, as well as an attachment disc (146; 246; 346), preferably out of metal, wherein the dragging element (144) is held in the adjusting unit (140; 240) by means of a press fit and/or
b) the base element (110; 210; 310) and the adjustment unit (140; 240) comprise interacting structures which in the screwed-in state of the adjustment unit (140; 240) form a counter and/or transport security.

9. Fastening arrangement (100; 200; 300) according to claim 8, first alternative, in which the dragging element (144) comprises a first and a second axial end, wherein the first axial end is arranged flush with a first side of the attachment disc (146; 246; 346) and a second side opposite to the first side of the attachment disc (146; 246; 346) abuts the adjusting unit (140; 240).

10. A first component (A) in combination with a fastening arrangement (100; 200; 300) according to one of the preceding claims, wherein the fastening arrangement (100; 200; 300) is snapped in particular into an opening (170; 370) of the first component (A).

11. A first (A) and a second component (B) which are fastened to each other via the fastening arrangement (100; 200; 300) according to one of the claims 1 to 9 and by means of a fastening screw (160; 360).

12. The first (A) and the second component (B) according to claim 11, wherein the fastening screw (160; 360) is screwed into a fastening nut which is arranged at a third component (C), while the first component (A) is a roof membrane, the second component (B) is a body structure and the third component (C) is a roof rail.

13. Manufacturing method of a fastening arrangement (100; 200; 300) according to one of the claims 1 to 9, **characterized by** the following steps:
a providing a base element (110; 210; 310) with a first (112; 212; 312) and a second axial end (114) which on a radial outside comprises a holding structure (120; 220; 320) for holding the base element (110; 210; 310) in an opening (170; 370) of the first component (A),
b. providing an adjusting unit (140; 240) with a dragging unit,
c. screwing the adjusting unit (140; 240) into the base element (110; 210; 310) from the second axial end (114) of the base element (110; 210; 310).

14. Manufacturing method according to claim 13, in which the step of providing the base element (110; 210; 310) comprises:
d. providing the holding structure (120; 220; 320) of the base element (110; 210; 310) with two attachment arms (122; 222; 322) adjacent to the first axial end (112; 212; 312) of the base element (110; 210; 310), so that the attachment arms (122; 222; 322) are engageable with a first side of the first component (A) adjacent to the opening (170; 370) of the first component (A), wherein the attachment arms (122; 222; 322) are preferably arranged opposite one another, and/or
e. providing two holding segments (126; 226; 326) which are in particular W-shaped and which provide an attachment surface (128; 228; 328) axially spaced from the first axial end (112; 212; 312) of the base element (110; 210; 310), so that the attachment surface (128; 228; 328) is engageable with a second side of the first component (A) adjacent to the opening (170; 370) of the first component (A).

15. Manufacturing method according to claim 14, second alternative wherein
f. each of the holding segments (126) is arranged at one of the attachment arms (122) by means of an elastic partial portion (130), in particular a bending spring, or
g. the base element (110; 210; 310) comprises a pin (232) which projects radially to the outside, axially spaced from the first axial end (212), and each of the holding segments (226) comprises an opening (234) so that the method comprises the further step of arranging the holding segments (226) on the pin (232).

16. Manufacturing method according to one of the claims 13 to 15, wherein the step of providing the base element (110; 210; 310) comprises:
d. providing a nut and arranging the nut in a housing material of the base element (110; 210; 310), in particular by means of embedding in a plastic material, and/or
the step of providing the adjusting unit (140; 240) comprises:
e. providing a thread sleeve and a dragging unit comprising an attachment disc (146; 246; 346), preferably out of metal, and of a dragging element (144), preferably out of plastic material.

17. Manufacturing method according to claim 16, second alternative, with the further step:
f. pressing the dragging element (144) into the thread sleeve which is screwed into the base element (110; 210; 310), so that an attachment disc (146; 246; 346) is flush with a first side with a first end of the dragging element (144) and abuts on a second side opposite to the first side at the thread sleeve.

18. Assembly method of a fastening arrangement (100; 200; 300), in particular of a fastening arrangement (100; 200; 300) according to one of the claims 1 to 9, **characterized by** the steps:
a. inserting the fastening arrangement (100; 200; 300) into a first opening (170; 370) of a first component (A), wherein the fastening arrangement (100; 200; 300) comprises
a base element (110; 210; 310) with a first (112; 212; 312) and a second axial end (114) which comprises a holding structure (120; 220; 320) at a radial outer side for holding the base element (110; 210; 310) in the first opening (170; 370) of the first component (A), and
an adjusting unit (140; 240) which is screwable into the base element (110; 210; 310) having a dragging unit inserted in there, wherein
the holding structure (120; 220; 320) of the base element (110; 210; 310) comprises a holding segment (126; 226; 326) which, with regard to a plane perpendicular to the longitudinal axis of the base element (110; 210; 310) is arranged perpendicular at an angle unequal 0° or which is pivotable about an axis in the plane,
b. arranging a second component (B) in a distance to the first component (A) with a fastening arrangement (100; 200; 300) inserted in there,
c. inserting a fastening screw (160; 360) through an opening (172) in the second component (B) until the fastening screw (160; 360) comes into engagement with the dragging unit,
d. rotating the fastening screw (160; 360) which causes the adjusting unit (140; 240) to rotate conjointly, to be moved in abutment with the second component (B) and then, an angle between the first and the second component (B) is compensated by means of the holding segment (126; 226; 326) so that a longitudinal axis of the fastening arrangement (100; 200; 300) extends perpendicular to a plane of the second component (B) and after that
e. screwing the fastening screw (160; 360) into a fastening nut.

## Revendications

1. Arrangement de fixation (100 ; 200 ; 300) pour la fixation d'un premier composant (A) à un deuxième composant (B) avec compensation automatique de tolérances dans l'écart entre le premier composant (A) et le deuxième composant (B), présentant les caractéristiques suivantes :
a. un élément de base (110 ; 210 ; 310) comprenant une première (112 ; 212 ; 312) et une deuxième extrémité axiale (114) ainsi qu'une structure de maintien (120 ; 220 ; 320) sur un côté radialement extérieur pour le maintien de l'élément de base (110 ; 210 ; 310) dans une ouverture (170 ; 370) du premier composant (A), et l'arrangement de fixation (100 ; 200 ; 300) est **caractérisé en ce qu'**il comporte en outre :
b. une unité de réglage (140 ; 240) apte à être vissée dans l'élément de base (110 ; 210 ; 310), avec une unité d'entraînement insérée dans celle-ci, tandis que
c. une vis de fixation (160 ; 360) peut être reliée à l'unité de réglage (140 ; 240) par le biais de l'unité d'entraînement par une liaison d'entraînement amovible, de sorte que lors d'une rotation de la vis de fixation (160 ; 360), l'unité de réglage (140 ; 240) peut être entraînée en rotation conjointement et déplacée en appui avec le deuxième composant (B), dans lequel
d. la structure de maintien (120 ; 220 ; 320) de l'élément de base (110 ; 210 ; 310) présente un segment de maintien (126 ; 226 ; 326), lequel est, par rapport à un plan perpendiculaire à l'axe longitudinal de l'élément de base (110 ; 210 ; 310)
d1. disposé selon un angle différent de 0° ou
d2. apte à pivoter autour d'un axe du plan, de sorte que
un angle entre le premier (A) et le deuxième composant (B) peut être compensé de telle façon au moyen du segment de maintien (126 ; 226 ; 326), que lors de l'appui de l'unité de réglage (140 ; 240) avec le deuxième composant (B), un axe longitudinal de l'arrangement de fixation (100 ; 200 ; 300) s'étend perpendiculairement à un plan du deuxième composant (B).

2. Arrangement de fixation (100 ; 200 ; 300) selon la revendication 1, dans lequel
l'élément de base (110 ; 210 ; 310) présente un premier filetage intérieur (116 ; 216 ; 316) et l'unité de réglage (140 ; 240) présente un premier filetage extérieur, dans lequel le premier filetage extérieur de l'unité de réglage (140 ; 240) forme un premier accouplement par filetage dans un premier sens avec le premier filetage intérieur (116 ; 216 ; 316) de l'élément de base (110 ; 210 ; 310) et l'unité de réglage (140 ; 240) peut être vissée dans l'élément de base (110 ; 210 ; 310) depuis la deuxième extrémité axiale (114) de l'élément de base (110 ; 210 ; 310), et
la vis de fixation (160 ; 360) présente un deuxième filetage extérieur dans un deuxième sens, lequel est opposé au premier sens, et peut être insérée à travers une ouverture de l'élément de base (110 ; 210 ; 310) et de l'unité de réglage (140 ; 240), de sorte que l'unité de réglage (140 ; 240) peut être déplacée dans le deuxième sens en appui avec le deuxième composant (B) par rotation de la vis de fixation (160 ; 360).

3. Arrangement de fixation (100 ; 200 ; 300) selon l'une des revendications précédentes, dans lequel la structure de maintien (120 ; 220 ; 320) de l'élément de base (110 ; 210 ; 310) présente deux bras d'appui (122 ; 222 ; 322) adjacents à la première extrémité axiale (112 ; 212 ; 312), de sorte que les bras d'appui (122 ; 222 ; 322) peuvent être mis en appui avec un premier côté du premier composant (A) adjacent à l'ouverture (170 ; 370) du premier composant (A).

4. Arrangement de fixation (100 ; 200 ; 300) selon l'une des revendications précédentes, lequel présente deux segments de maintien (126 ; 226 ; 326), lesquels sont en particulier en forme de W et lesquels fournissent une surface d'appui (128 ; 228 ; 328) axialement espacée de la première extrémité axiale (112 ; 212 ; 312) de l'élément de base (110 ; 210 ; 310), de sorte que la surface d'appui (128 ; 228 ; 328) peut être mise en appui avec un deuxième côté du premier composant (A) adjacent à l'ouverture (170 ; 370) du premier composant (A).

5. Arrangement de fixation (100 ; 200) selon la revendication 4, dans lequel
a) la structure de maintien (120) de l'élément de base (110) présente deux bras d'appui (122) adjacents à la première extrémité axiale (112), de sorte que les bras d'appui (122) peuvent être mis en appui avec un premier côté du premier composant (A) adjacent à l'ouverture (170) du premier composant (A), et dans laquelle chacun des segments de maintien (126) est disposé sur l'un des bras d'appui (122) par le biais d'une région partielle élastique (130), en particulier d'un ressort de flexion, ou
b) l'arrangement de fixation (200) présente, de façon axialement espacée de la première extrémité axiale (212) de l'élément de base (210), respectivement une tige (232) faisant saillie radialement vers l'extérieur à partir de l'élément de base (210).

6. Arrangement de fixation (200) selon la revendication 5, deuxième alternative, dans lequel les segment de maintien (226) présentent respectivement une ouverture (234), de sorte que les segments de maintien (226) peuvent être clipsés sur la tige (232) et disposés de façon à pouvoir pivoter librement à cet endroit.

7. Arrangement de fixation (100 ; 200 ; 300) selon l'une des revendications précédentes, dans lequel l'élément de base (110 ; 210 ; 310) présente un boîtier (118 ; 218 ; 318), en particulier en plastique, ainsi qu'un écrou disposé dans celui-ci, en particulier incorporé, lequel fournit le premier filetage intérieur (116 ; 216 ; 316).

8. Arrangement de fixation (100 ; 200 ; 300) selon l'une des revendications précédentes, dans lequel
a) l'unité d'entraînement comporte un entraînement (144), de préférence en plastique, ainsi qu'un disque d'appui (146 ; 246 ; 346), de préférence en métal, dans lequel l'entraînement (144) est maintenu au moyen d'un ajustement serré dans l'unité de réglage (140 ; 240), et/ou
b) l'élément de base (110 ; 210 ; 310) et l'unité de réglage (140 ; 240) présentent des structures coopérantes, lesquelles forment une sécurité de blocage et/ou de transport (150 ; 250) dans l'état vissé de l'unité de réglage (140 ; 240).

9. Arrangement de fixation (100 ; 200 ; 300) selon la revendication 8, première alternative, dans lequel l'entraînement (144) présente une première et une deuxième extrémité axiale, dans lequel la première extrémité axiale est disposée en affleurement avec un premier côté du disque d'appui (146 ; 246 ; 346) et un deuxième côté du disque d'appui (146 ; 246 ; 346) opposé au premier côté s'applique sur l'unité de réglage (140 ; 240).

10. Premier composant (A) en combinaison avec un arrangement de fixation (100 ; 200 ; 300) selon l'une des revendications précédentes, dans lequel l'arrangement de fixation (100 ; 200 ; 300) est en particulier clipsé dans une ouverture (170 ; 370) du premier composant (A).

11. Premier composant (A) et deuxième composant (B), lesquels sont fixés l'un à l'autre par le biais d'un arrangement de fixation (100 ; 200 ; 300) selon l'une des revendications 1 à 9 et au moyen d'une vis de fixation (160 ; 360).

12. Premier composant (A) et deuxième composant (B) selon la revendication 11, dans lesquels la vis de fixation (160 ; 360) est vissée dans un écrou de fixation, lequel est disposé sur un troisième composant (C), tandis que le premier composant (A) est une membrane de toit, le deuxième composant (B) est une structure de carrosserie et le troisième composant (C) est un rail de toit.

13. Procédé de fabrication d'un arrangement de fixation (100 ; 200 ; 300) selon l'une des revendications 1 à 9, **caractérisé par** les étapes suivantes :
a. mise à disposition d'un élément de base (110 ; 210 ; 310) doté d'une première (112 ; 212 ; 312) et d'une deuxième extrémité axiale (114), lequel présente une structure de maintien (120 ; 220 ; 320) sur un côté radialement extérieur pour le maintien de l'élément de base (110 ; 210 ; 310) dans une ouverture (170 ; 370) du premier composant (A),
b. mise à disposition d'une unité de réglage (140 ; 240) dotée d'une unité d'entraînement,
c. vissage de l'unité de réglage (140 ; 240) dans l'élément de base (110 ; 210 ; 310) depuis la deuxième extrémité axiale (114) de l'élément de base (110 ; 210 ; 310).

14. Procédé de fabrication selon la revendication 13, dans lequel l'étape de mise à disposition de l'élément de base (110 ; 210 ; 310) présente :
d. la mise à disposition de la structure de maintien (120 ; 220 ; 320) de l'élément de base (110 ; 210 ; 310) avec deux bras d'appui (122 ; 222 ; 322) adjacents à la première extrémité axiale (112 ; 212 ; 312) de l'élément de base (110 ; 210 ; 310), de telle façon que les bras d'appui (122 ; 222 ; 322) peuvent être mis en appui avec un premier côté du premier composant (A) adjacent à l'ouverture (170 ; 370) du premier composant (A), dans lequel les bras d'appui (122 ; 222 ; 322) sont disposés de préférence l'un en face de l'autre, et/ou
e. mise à disposition de deux segments de maintien (126 ; 226 ; 326), lesquels sont en particulier en forme de W et lesquels fournissent une surface d'appui (128 ; 228 ; 328) axialement espacée de la première extrémité axiale (112 ; 212 ; 312) de l'élément de base (110 ; 210 ; 310), de telle façon que la surface d'appui (128 ; 228 ; 328) peut être mise en appui avec un deuxième côté du premier composant (A) adjacent à l'ouverture (170 ; 370) du premier composant (A).

15. Procédé de fabrication selon la revendication 14, deuxième alternative, dans lequel
f. chacun des segments de maintien (126) est disposé sur l'un des bras d'appui (122) par le biais d'une région partielle élastique (130), en particulier d'un ressort de flexion, ou
g) l'élément de base (210) présente, de façon axialement espacée de la première extrémité axiale (212), respectivement une tige (232) faisant saillie radialement vers l'extérieur et les segments de maintien (226) présentent respectivement une ouverture (234), de sorte que le procédé comporte l'étape supplémentaire d'agencement des segments de maintien (226) sur la tige (232).

16. Procédé de fabrication selon l'une des revendications 13 à 15, dans lequel
l'étape de mise à disposition de l'élément de base (110 ; 210 ; 310) comporte :
d. la mise à disposition d'un écrou et l'agencement de l'écrou dans un matériau de boîtier de l'élément de base (110 ; 210 ; 310), en particulier par incorporation dans une matière plastique, et/ou
l'étape de mise à disposition de l'unité de réglage (140 ; 240) comporte :
e. la mise à disposition d'une douille filetée et d'une unité d'entraînement comportant un disque d'appui (146 ; 246 ; 346), de préférence en métal, et d'un entraînement (144), de préférence en plastique.

17. Procédé de fabrication selon la revendication 16, deuxième alternative, comprenant l'étape supplémentaire de :
f. pressage de l'entraînement (144) dans la douille filetée vissée dans l'élément de base (110 ; 210 ; 310), de telle façon qu'un disque d'appui (146 ; 246 ; 346) affleure avec une première extrémité de l'entraînement (144) avec un premier côté et s'applique sur la douille filetée avec un deuxième côté opposé au premier côté.

18. Procédé de montage d'un arrangement de fixation (100 ; 200 ; 300), en particulier d'un arrangement de fixation (100 ; 200 ; 300) selon l'une des revendications 1 à 9, **caractérisé par** les étapes suivantes :
a. insertion de l'arrangement de fixation (100 ; 200 ; 300) dans une première ouverture (170 ; 370) d'un premier composant (A), dans lequel l'arrangement de fixation (100 ; 200 ; 300) présente un élément de base (110 ; 210 ; 310) doté d'une première (112 ; 212 ; 312) et d'une deuxième extrémité axiale (114), lequel présente une structure de maintien (120 ; 220 ; 320) sur un côté radialement extérieur pour le maintien de l'élément de base (110 ; 210 ; 310) dans la première ouverture (170 ; 370) du premier composant (A), et
une unité de réglage (140 ; 240) apte à être vissée dans l'élément de base (110 ; 210 ; 310), avec une unité d'entraînement insérée dans celle-ci, dans lequel
la structure de maintien (120 ; 220 ; 320) de l'élément de base (110 ; 210 ; 310) présente un segment de maintien (126 ; 226 ; 326), lequel est disposé selon un angle différent de 0° par rapport à un plan perpendiculaire à l'axe longitudinal de l'élément de base (110 ; 210 ; 310) ou lequel peut être pivoté autour d'un axe du plan,
b. agencement d'un deuxième composant (B) à une distance du premier composant (A), avec l'arrangement de fixation (100 ; 200 ; 300) inséré dans celui-ci,
c. insertion d'une vis de fixation (160 ; 360) à travers une ouverture (172) dans le deuxième composant (B), jusqu'à ce que la vis de fixation (160 ; 360) vienne en prise avec l'unité d'entraînement,
d. rotation de la vis de fixation (160 ; 360), moyennant quoi l'unité de réglage (140 ; 240) est mise en rotation conjointement, est déplacée en appui avec le deuxième composant (B) et un angle entre le premier et le deuxième composant (B) est ensuite compensé de telle façon au moyen du segment de maintien (126 ; 226 ; 326), qu'un axe longitudinal de l'arrangement de fixation (100 ; 200 ; 300) s'étend perpendiculairement à un plan du deuxième composant (B), puis
e. vissage de la vis de fixation (160 ; 360) dans un écrou de fixation.
